# EUROPÄISCHE PATENTSCHRIFT

(11) **EP 1 596 113 B1**
(45) Veröffentlichungstag und Bekanntmachung des Hinweises auf die Patenterteilung: **13.06.2007**
(21) Anmeldenummer: 05008992.9
(22) Anmeldetag: 25.04.2005
(51) Int. Cl.: F16L 11/04, C08K 5/00, F16L 11/12

(54) **Thermoplastische Polyamid-Formmassen**
Thermoplastic polyamide moulding matters
Matieres de moulage en polyamide thermoplastique

(30) Priorität: 10.05.2004 DE 102004022963
(43) Veröffentlichungstag der Anmeldung: 16.11.2005
(73) Patentinhaber: EMS-Chemie AG, 7013 Domat/Ems (CH)
(72) Erfinder: Stöppelmann, Georg, Dr. rer. nat., 7402 Bonaduz (CH); Kettl, Ralph, Dipl.-Ing., 7417 Paspels (CH); Schwitter, Paul, 8718 Schänis (CH)
(74) Vertreter: Becker Kurig Straus

(56) Entgegenhaltungen:
- EP-A- 0 612 794
- DE-A1- 10 116 427
- GB-A- 1 012 815
- GB-A- 1 164 193

## Beschreibung

Die vorliegende Erfindung betrifft den in den Patentansprüchen angegebenen Gegenstand.

Die Erfindung betrifft daher insbesondere Kupfer-stabilisierte thermoplastische Polyamid-Formmassen mit Metalldesaktivator, die in einer bevorzugten Ausführungsform einen Aminoendgruppenüberschuss aufweisen. Diese Formmassen können als Schichtmaterial für Kühlflüssigkeitsleitungen verwendet werden.

Die Erfindung betrifft insbesondere eine ein- oder mehrschichtige Kühlflüssigkeitsleitung zum Transport von Kühlmedien, die eine besondere Stabilität gegenüber den anwendungsbedingten Umwelteinflüssen und erhöhten Temperaturen aufweist. Kühlmedien, die die vorgenannten Leitungen durchfliessen, können zum Beispiel Frostschutzmittel aus Ethylenglykol, Diethylenglykol oder Propylenglykol und Wasser enthalten.

Solche Kühlflüssigkeitsleitungen können eine zylindrische Mantelfläche aufweisen und / oder wenigstens in Teilbereichen gewellt sein.

Die erfindungsgemäßen Kühlflüssigkeitsleitungen finden Verwendung im gesamten Kühlsystem von Automobilen, das heißt für Kühlleitungen, Heizleitungen sowie für Entlüftungsleitungen.

Zur Stabilisierung von Polyamid-Formmassen gegen thermooxidativen oder photooxidativen Abbau sind zahlreiche Systeme bekannt. Zu den bekannten Stabilisatorsystemen gehören phenolische Antioxidantien, zum Beispiel aus der Gruppe der gehinderten Phenole, Antioxidantien auf Basis aromatischer Amine, sowie Kupferverbindungen. Insbesondere Gemische aus Kupferhalogeniden und Alkalihalogeniden haben sich als effektive Stabilisatoren gegen thermooxidative Alterung erwiesen. Die Gemische aus Kupferhalogeniden und Alkalihalogeniden sind in ihrer Stabilisierungswirkung und den anderen Stabilisatorsystemen überlegen. Sollen nämlich Polyamide bei Temperaturen oberhalb von 120°C dauerhaft eingesetzt werden, versagen organische Stabilisierungssysteme. Bei diesen Temperaturen zeigen nur Stabilisierungen auf Basis von Kupfersalzen eine Wirksamkeit, wenn eine thermooxidative Beständigkeit über mehrere tausend Stunden verlangt wird. Die genannten Stabilisatoren können den Polyamiden auf verschiedene Weise zugesetzt werden, so beispielsweise vor oder während der Polymerisation, Einpudern während der Trocknung, oder durch Compoundierung.

In DE 101 16 427 findet sich ein Beispiel für ein thermoplastisches Polyamidharz, welches nicht mit Kupferverbindungen stabilisiert wird

Beispiele einer Stabilisierung von Polyamid-Formmassen mit Kupferverbindungen werden in EP 0 745 642 B1 und EP 0 668 943 B1 erwähnt. EP 0 745 642 B1 beschreibt nämlich thermostabile, witterungsbeständige Polyamid-Formmassen, enthaltend als Stabilisator ein Gemisch aus einem Kupferhalogenid, einer oder mehreren Halogenverbindungen und hypophosphoriger Säure oder eines Alkali- oder Erdalkalisalzes dieser Säuren in einem bestimmten molaren Verhältnis zueinander. Dieses Stabilisatorgemisch soll eine sehr gute Stabilisierung gegenüber thermooxidativer und photooxidativer Alterung bewirken.

EP 0 668 943 B1 beschreibt stabilisierte Polyamid-Filamente, umfassend Polyphthalamid, ein kupferhaltiges Stabilisierungsmittel und einen funktionalisierten Polyolefinsynergisten, wobei das Stabilisierungsmittel eine in dem Polyphthalamid lösliche Kupferverbindung und ein Alkalimetallhalogenid umfasst und der Synergist in einer Menge von 1 bis 20 Gew.-% vorhanden ist.

Über die genannten Systeme hinaus sind weitere Stoffgemische zur Stabilisierung von Polyamiden gegen thermooxidativen und photooxidativen Abbau beschrieben worden. US-A-2,705,227 beschreibt ein ternäres Stabilisatorsystem, bestehend aus einer Kupferverbindung, einer Halogenverbindung und einer Phosphorsäure oder eines Alkalisalzes einer Phosphorsäure.

GB-A-1 140 047 beschreibt ein ternäres Stabilisatorsystem aus einem Kupfersalz, phosphoriger oder hypophosphoriger Säure oder einer Verbindung dieser Säuren und einem Alkalihalogenid. Dem beanspruchten ternären Stabilisatorsystem ist die Beschränkung auferlegt, dass die Phosphorverbindung in höchstens der halben molaren Menge des eingesetzten Kupfersalzes eingesetzt wird. Wird als Phosphorverbindung hypophosphorige Säure verwendet, so darf gemäß der GB-A-1 140 047 diese höchstens zu einem Viertel der molaren Konzentration des eingesetzten Kupfersalzes verwendet werden. Die Phosphorverbindung wird in dem zitierten molaren Unterschuß in Bezug auf die zugesetzte Kupfermenge zugegeben, um eine helle Farbe der Polyamid-Formmassen zu erhalten.

DE-A-2 107 406 beschreibt ein ternäres Stabilisatorsystem bestehend aus Kupferstearat, Kaliumjodid und Manganhyposphit. Die mit dieser Mischung stabilisierten Formmassen werden als farblos beschrieben.

Die EP-A-0 612 749 beschreibt stabilisierte Polyamid-Formmassen, die als Stabilisator sowohl einen ionischen oder komplexen Kupferstabilisator, als auch gleichzeitig elementares, fein disperses Kupfer enthalten.

Die bekannten Stabilisatorsysteme verzögern die thermooxidative und die photooxidative Alterung von Polyamid-Formmassen. Neue Anwendungen erhöhen die Anforderungen an die Stabilität von Polyamid-Formmassen gegenüber thermooxidativem oder photooxidativem Abbau. Dies gilt zum Beispiel für die Anwendung von Polyamid-Formmassen im Motorraum von Automobilen. In diesem und auch in anderen Bereichen sind die Polyamid-Formmassen einer starken Temperaturbelastung über lange Zeiträume ausgesetzt. Bei diesen erhöhten Temperaturen eignen sich für Polyamide nur Stabilisierungen auf Kupferbasis.

Der Mechanismus der Stabilisierung von Polyamiden durch die Kombination von Metallsalzen wie Kupferhalogeniden und Alkalihalogeniden ist beispielsweise von P. Gijsman et al. in Polymer Degradation and Stability 49 (1995), 127-133 beschrieben. Die Kombination von Kupfersalzen mit aromatischen Halogenverbindungen ist in der DE-A-19847626 sowie mit Komplexbildnern wie zum Beispiel Mercaptanen oder Phosphinen ist in der DE-A-19847627 erwähnt. Mit diesen Systemen soll die Verfärbung von Stabilisierungen auf Kupferbasis reduziert werden.

Aus dem Stand der Technik ist es bekannt Metalldesaktivatoren/Antioxidantien, wie zum Beispiel sterisch gehinderte Phenole einzusetzen. Sehr oft werden diese Verbindungen zum Stabilisieren von Polyolefinen, insbesondere auch für Polyphenylenether oder für den dauernden Einsatz im Kontakt mit Kupfer, beispielsweise bei Kabelanwendungen, eingesetzt.

Für die Art der Stabilisierung (von Polyolefinen) werden Metalldesaktivatoren eingesetzt, die gemäß der Literaturstelle: "Plastics Additives Handbook, 4th Ed., 1993, Kapitel 2.4", folgende chemischen Strukturen aufweisen: Amide von aliphatischen und aromatischen Mono- und Dicarbonsäuren und ihre N-monosubstituierten Derivate, cyclische Amide, wie zum Beispiel Barbitursäure, Hydrazone und Bishydrazone von aliphatischen und aromatischen Aldehyden, Hydrazide von aliphatischen und aromatischen Mono- und Dicarbonsäuren, Bis-acylierte Hydrazin-Derivate, heterocyclische Verbindungen wie Melamine, Benzotriazole, 8-Oxoquinoline, Hydrazone und acylierte Derivate von Hydrazino-Triazinen, Aminotriazole und acylierte Derivate davon, Polyhydrazide, molekulare Kombinationen von sterisch gehinderten Phenolen und Metall komplexierenden Gruppen, Nickelsalze von Benzylphosphonsäuren, gegebenenfalls in Kombination mit anderen Antioxidantien oder Metalldesaktivatoren, Pyridinethiol/Sn-Verbindungen, tertiäre Phosphorsäureester von Thiobisphenol. In der Patentliteratur werden in diesem Zusammenhang weitere zusätzliche strukturelle Klassen wie zum Beispiel N,N'-Bis-salicylal-ethylendümide, Salicylaloximine, Derivate von Ethylendiaminotetraessigsäure etc. erwähnt. Viele der oben genannten Verbindungen können allerdings in der Praxis als Metalldesaktivator bei Thermoplasten aufgrund ihrer niedrigen Aktivität, ungenügender thermischer Stabilität oder aufgrund von Flüchtigkeit nicht eingesetzt werden.

GB-A-1 012 815 beschreibt Poly(ω-amino-carbonsäuren), die mit Hilfe von Kupfer und einem hitzestabilen Dicarbonsäurediamid stabilisiert werden.

GB-A-1 164 193 beschreibt Polyamide, die durch mit Harnstoff-Derivaten komplexiertes Kupfer stabilisiert werden.

Aus EP 1 198 520 B1 ist es aber auch bekannt, sterisch gehinderte Phenole in Polyamid-Formmassen einzusetzen.

Unter phenolischen Antioxidantien aus der Gruppe der sterisch gehinderten Phenole versteht der Fachmann im allgemeinen organische Verbindungen, die wenigstens eine phenolische Gruppe enthalten, wobei die aromatische Hälfte wenigstens an einer, vorzugsweise an beiden Positionen, direkt angrenzend zum Kohlenstoffatom mit der phenolischen Gruppe, substituiert ist. Die Substituenten angrenzend an die Hydroxygruppe sind Alkylreste, vorzugsweise ausgewählt aus der Gruppe aus Alkylgruppen mit 1 bis 10 Kohlenstoffatomen. Sie sind vorzugsweise tertiäre Butylgruppen. Geeignete gehinderte Phenole umfassen zum Beispiel Tetrakis(Methylen(3,5-di-(tert)-butyl-4-hydroxyhydrozinnsäure))methan, kommerziell bekannt als Irganox 1010 (Ciba Specialty Chemicals). Es ist auch bekannt, derartige Antioxidantien mit gehinderter

Phenolgruppe HT (Hochtemperatur)- Polyamid-Spritzgusszusammensetzungen zuzusetzen, damit diese eine verbesserte thermische Stabilität aufweisen (vgl. EP 1 198 520 B1).

EP 1 198 520 B1 beschreibt Spritzgußzusammensetzungen, umfassend teilaromatische Hochtemperatur-Polyamide, enthaltend aliphatische Diaminterephthalamid-Einheiten, olefinisches Schlagzähmodifikationsmittel und einen kupferhaltigen thermischen Stabilisator, umfassend ein Alkalimetallhalogenid, ein Kupfer(I)halogenid in einem Gewichtsverhältnis von 2,5:1 bis 20:1 und einer Verbindung, ausgewählt aus sekundären Arylaminen und gehinderten Phenolen. Gemäß der EP 1 198 520 B1 sollen neben einer Verbesserung der thermischen Stabilität einer schlagzähmodifizierten Hochtemperatur-Polyamidformulierung auch die Bildung von thermooxidativen Abbauprodukten verhindert werden, die ohne Hitzestabilisator (gehindertes Phenol) entstehen würden. Gemäß EP 1 198 520 B1 werden teilaromatische Polyamide verwendet, die einen niedrigen Gehalt von Aminoendgruppen aufweisen. Gemäß der allgemeinen Lehre der EP 1 198 520 B1 werden nämlich teilaromatische Polyamide mit Aminoendgruppengehalten von 25 µÄqu./g oder weniger, das heißt von 10 oder 5 µÄqu./g verwendet (vgl. EP 1 198 520 B1, Abs. [0097]). Die in den Beispielen der EP 1 198 520 B1 bevorzugt verwendeten aminoendgruppenarmen Polyamide PPA3, PPA4 weisen Carboxylendgruppengehalte von 91 bis 86 µÄuq./g auf. (vgl. Abs. [0085], [0086]). Zusammen mit dem Kupfer-Stabilisator zeigen diese Zusammensetzungen ein vermindertes Maß an thermooxidativen Abbauprodukten in den Formwerkzeugen (vgl. EP 1 198 520 B1, Abs. [0089]).

EP 1 198 520 B1 beschreibt daher in einem anderen Aspekt die Verhinderung von Ablagerungen bei teilaromatischen Polyamiden, die sterisch gehinderte Phenole und Kupfer-Stabilisatoren enthalten. Aber auch andere Polyamide neigen zur Bildung von Ablagerungen, wenn sie höheren Temperaturen, wie sie zum Beispiel bei der thermoplastischen Umformung auftreten können, ausgesetzt werden. Abhängig vom Polyamidtyp setzen sich diese Ablagerungen aus unterschiedlichen Anteilen an Monomeren, Oligomeren sowie diversen Abbauprodukten, die während der Verarbeitung entstehen, zusammen.

Polyamidschmelzen weisen im thermodynamischen Gleichgewichtszustand bestimmte Konzentrationen an linearen und gegebenenfalls zyklischen Monomeren sowie linearen und zyklischen Oligomeren sowie auch Wasser auf. Die niedrigmolekularen Bestandteile beeinflussen die Verarbeitbarkeit der Produkte. Sie senken die Viskosität der Polymerschmelzen. Bei Spritzguss- oder Extrusionsprozessen können Restmonomere, insbesondere Lactame, und zyklische Oligomere ausdampfen und durch die Bildung von Belägen stören, wobei Feststoffbeläge besonders störend sind.

Polyamide enthalten daher, wie alle in Stufenwachstumsreaktionen entstandenen Polymere, von Natur aus geringe Konzentrationen an Restmonomeren und Oligomeren.

Im Allgemeinen werden die Monomeren und/oder Oligomeren durch statische oder dynamische Extraktion mit Wasser, Methanol, Ethanol, Ethanol/Wasser oder Chloroform aus den Polyamidgranulaten abgetrennt. Nach DIN 53378 bzw. DIN ISO 6427 sind Polyamid-Pulver bestimmter Körnung unter bestimmten Bedingungen mit Methanol zu extrahieren. Die Monomeren fallen stets im Gemisch mit Oligomeren an. Diese lassen sich je nach Art und Molmasse in Abhängigkeit von den Extrationsbedingungen mehr oder weniger vollständig aus den Polyamiden abtrennen.

Bei den amorphen teilaromatischen Copolyamiden besteht aber die Problematik, dass eine Extraktion mit üblichen Lösemitteln wie Methanol oder Methylenchlorid wegen der hohen Glasübergangstemperatur der Produkte keine nennenswerten Extraktmengen liefert und das Polymermaterial bei der Verwendung höhersiedender Alkohole zusammenfließt.

Bei teilaromatischen Polyamiden und den sogenannten HT-Polyamiden wie PA 6T/6I müssen, wie bereits erwähnt wurde, neben den Restmonomeren und Oligomeren auch die bei der Herstellung und Verarbeitung gebildeten, niedermolekularen Abbauprodukte hinsichtlich der Belagsbildung berücksichtigt werden.

Daher ist es wünschenswert, die oben angesprochenen niedrigmolekularen Bestandteile als auch Oligomere möglichst zu entfernen bzw. zu vermeiden, so dass bei der späteren thermoplastischen Verarbeitung keine Feststoffablagerungen oder Beläge mehr entstehen.

Polyamid 12 (PA 12) ist nun ein Polyamid-Typ, der sich durch ein speziell interessantes Eigenschaftsprofil auszeichnet. So lässt sich Polyamid 12 auf die verschiedensten Arten modifizieren, und die resultierenden Formmassen sind danach ausgezeichnet thermoplastisch im Spritzguss und in Extrusionsprozessen zu Gebrauchsgegenständen von hohem Praxiswert umformbar. Polyamid 12 entspricht insgesamt dem Polyamid-Typ, dessen Eigenschaften im Praxisgebrauch bei Änderung von Temperatur und Feuchte am wenigsten beeinflusst werden.

Ein Problem ist aber, dass beim üblichen, hydrolytischen Polymerisationsprozess/Autoklavenprozess der Monomerumsatz nur zu ca. 99,5 % erfolgt und das verbleibende Restlactam im Polymer schwerlöslich ist, so dass es insbesondere beim Verarbeiten aus der Schmelze, aber auch im späteren Praxisgebrauch zum Ausschwitzen und Sublimieren von Lactam 12 (LC12), insbesondere auf gekühlte Flächen, z. B. die Oberflächen der Werkzeuge und der Fertigteile, und damit zu Belagsbildung kommt. Insbesondere wegen des hohen Schmelzpunktes von Lactam 12 bilden solche Sublimate oft störende Ablagerungen, die insbesondere dann, wenn weitere Zusätze an die Oberfläche migrieren, Anlass zu Prozessstörungen mit Oberflächenbeschädigungen und damit zu Produktionsunterbrüchen führen können und sich auch sogenannte "Black-Spots" bilden können. Bekannte Maßnahmen zur Reduktion und Eliminierung des Lactam 12 - Restgehaltes sind z.B., die Schmelze- und die Festphasen- Nachkondensation mit Vakuumeinwirkung sowie Flüssigextraktionsprozesse oder die Umfällung aus alkoholischer Lösung. Auch diese Prozesse, bei denen sich Lactam unter Wärmeeinwirkung verflüchtigt, können durch das Lactamsublimat gestört werden. Zudem sind Lactamnebel leichtentzündlich, und die Prozesse bedürfen spezieller Vorsichtsmaßnahmen. Zudem kann die zusätzliche thermische Belastung das Polymer schädigen. Bei der thermoplastischen Verarbeitung von Polyamid 12 (PA12) - Formmassen im Spritzgussverfahren und in der Extrusion ist die Bildung von Feststoffablagerungen, die insbesondere aus Lactam 12 (LC 12) bestehen, nachteilig.

Erwünscht sind somit einfache, kostenwirksame Maßnahmen zur Vermeidung der Bildung von Feststoffablagerungen oder von Belägen bei der späteren thermoplastischen Verarbeitung von Polyamid-Formmassen, die insbesondere auf Polyamid, besonders bevorzugt auf Polyamid 12, oder auch einem Copolymer bzw. Polyamid, das Polyamidbausteine, insbesondere Polyamid 12-Bausteine mitenthält, basieren.

Die oben angesprochenen Formmassen können Verwendung finden bei der thermoplastischen Umformung zu Gebrauchsgegenständen wie zum Beispiel in kontinuierlichen Prozessen wie der Extrusion zu Folien, Rohren und Ummantelungen. Kunststoffrohre für flüssige Medien wie zum Beispiel für Kühlwasser, Treibstoff, Bremsflüssigkeiten, etc. werden im Automobilsektor für spezielle Anwendungen in den letzten Jahren verstärkt eingesetzt.

In diesem Zusammenhang kommen Kühlwasserleitungen, bestehend aus einer einzigen Polymerschicht, sogenannte Monorohre, aber auch Mehrschichtrohre zum Einsatz. Mehrschichtrohre werden mit und ohne Glasfaserverstärkung eingesetzt.

Kühlflüssigkeitsleitungen haben in der Regel keine einfachen, sondern komplizierte Geometrien und werden oft aus Metallteilen und elastischen Zwischenstücken zusammengesetzt, um die zum Teil intensiven Vibrationen des Motors auszugleichen. Dafür werden gemäß Stand der Technik mit Fasergewebe verstärkte Gummileitungen eingesetzt. Solche bevorzugt für Fahrzeugmotoren eingesetzten Gummileitungen haben den Nachteil, dass sie einerseits relativ teuer sind und trotzdem nicht den Anforderungen, besonders bei im Motorraum entstehenden hohen Temperaturen, vollständig gewachsen sind. Nach einer Betriebsdauer, die circa 100.000 Fahrkilometer entspricht, fallen die mechanischen Eigenschaften bereits stark ab. Noch kritischer wird die Stabilität von Kühlwassergummileitungen für zukünftige Automobilmotoren, die die Temperaturen im Motorraum noch weiter ansteigen lassen als bisher, wodurch der Abfall der mechanischen Eigenschaften zusätzlich beschleunigt wird.

In EP-A-0 659 534 sind zum Beispiel sequentiell extrudierte Kühlflüssigkeitsleitungen mit einer berstdruckfesten Außenschicht und einer für Kühlmittel inerten, nicht quellbaren Innenschicht offenbart, wobei die äussere Schicht aus einem Polyamid und die mit der äußeren Schicht verträgliche Innen- oder Zwischenschicht aus mit Carboxyl- oder Säureanhydridgruppen modifizierten Polyolefinen besteht.

WO 94/18485 beschreibt hauptsächlich Rohrkonstruktionen zum Leiten von alkoholhaltigen Kraftstoffen. Die eingesetzten Materialien sind marktübliche Polyamide mit einem ausgeglichenen Amino- zu Carboxyl-Endgruppen-Verhältnis als Außenschicht, HDPE-Copolymere mit Acrylsäure oder Maleinsäureanhydrid als Zwischenschicht und ein HDPE als Innenschicht, welches auch mit Hilfe von Wasserdampf vernetzt sein kann. Die Verwendung von Kühlflüssigkeiten wird in WO 94/18458 nicht erwähnt.

EP 0 542 184 B1 beschreibt weiterhin Mehrschichtrohre mit guter Sperrwirkung zur Durchleitung von aromatischen oder aliphatischen Lösungsmitteln wie auch von Kraftstoffen. Die Innen- und Außenschicht wird üblicherweise von Polyamiden gebildet, die verbindende Zwischenschicht von üblichen linearen Polyestern und von einem Anteil weiterer Polymere, welche bevorzugt mit reaktiven sauren Gruppen funktionalisiert sind.

Das Problem der zuvor beschriebenen Mehrschichtrohre besteht aber darin, dass sie beim wiederholten Gebrauch, speziell bei höheren Temperaturen und unter dem Einfluss bestimmter durchgeleiteter flüssiger Stoffe nicht standhalten. Sie werden Spannungsrissanfällig und demzufolge brüchig oder besitzen eine zu geringe Hydrolysebeständigkeit und neigen damit zur Delaminierung der Schichten. Die Gründe für diese Phänomene liegen einmal in der mangelnden Haftung zwischen den einzelnen Schichten und zweitens in der für höhere Beanspruchung zu geringen Beständigkeit der verwendeten polymeren Stoffe.

In EP 0 754 898 B1 (EMS-Chemie AG) werden daher dreischichtige, flexible Kühlflüssigkeitsleitungen mit hoher Hydrolyse- und Berstdruckfähigkeit bereitgestellt, deren Außenschicht aus einem besonderen Polyamid, nämlich Polyamid 12 mit Aminoendgruppenüberschuss besteht. Die Innenschicht dieser Kühlflüssigkeitsleitung besteht aus vernetztem Polyethylen und die Zwischenschicht aus einem zur Außen- und Innenschicht kompatiblen Material. Die beschriebenen Polyamide mit Aminoendgruppenüberschuss weisen eine deutlich verbesserte und beständigere Haftung zu Polyolefinen mit funktionellen Seitengruppen auf. Diese Haftung wird auch bei dauerndem Angriff durch Hitze und Wasser nicht gelöst.

Weiterhin sind auch koextrudierte rohrförmige Mehrschichtverbunde bekannt, die zur Erhöhung der Flexibilität eine gewellte Wandung aufweisen. EP 0 436 923 B2 (EMS-Chemie AG) beschreibt beispielsweise flexible Kühlflüssigkeitsleitungen mit hoher Hydrolyse- und Berstdruckbeständigkeit für Motoren, die durch Koextrusion aus den Polymerkomponenten hergestellt sind und eine polyolefinische Innenschicht sowie eine Polyamidaußenschicht besitzen. Polyamid in der Außenschicht gewährleistet eine hohe Berstdruckbeständigkeit und läßt die von den Automobilherstellern geforderten 8 bar/120°C leicht erreichen, so dass die für Kühlflüssigkeitsleitungen aus Gummi unumgängliche Fasergewebe-Verstärkung entfallen kann. Die erforderliche Flexibilität, die sich aus der Notwendigkeit ergibt, auf engem Raum starke Leitungskrümmungen zu ermöglichen, wird durch sogenannte Wellrohre erreicht, deren Wandung aus dem Stand der Technik bekannten Verfahren zum Beispiel ringförmig oder spiralförmig gewellt wurde.

Die gewellten Rohre gemäß EP 0 436 923 B2 sind wesentlich flexibler als zum Beispiel verstärkte Gummileitungen nach dem Stand der Technik.

Thermoplastische Kühlflüssigkeitsleitungen sind weiterhin aus den Dokumenten DE-A-4000434, DE-GM 9402180.5, DE-GM 9319879.5, DE-GM 9319880.9 und DE-A-4432584.3 bekannt.

So wird in der DE-A-4000434 eine flexible Kühlflüssigkeitsleitung beschrieben, die zweischichtig ausgebildet ist, wobei die Innenschicht ein mit funktionellen Gruppen versehenes Polyolefin ist und die Außenschicht aus Polyamid aus der Gruppe der Homo- oder Copolyamide oder deren Blends besteht. Kühlflüssigkeitsleitungen dieser Ausformung, die als Thermoplastwellrohr ausgelegt sind, haben den Nachteil, dass herkömmlich polymerisierte Polyamide eine massige Hydrolysebeständigkeit aufweisen, und dass die gemäß DE-A-4000434 verwendeten gepfropften Polyolefine bei Kontakt mit Frostschutzmittel und bei Temperaturen größer 100°C sehr stark zu Spannungsrissen neigen und daher in der Anwendung versagen.

Ferner ist es für die Innenschicht von thermoplastischen Kühlflüssigkeitsleitungen sehr wichtig, dass die Kühlmittel- und Wasserpermeation möglichst gering ist, da diese Flüssigkeiten die berstdruckbeständige Außenschicht schädigen.

Ein weiterer Nachteil von Kühlflüssigkeitsleitungen gemäß DE-A-4000434 besteht darin, dass die interlaminare Haftung zwischen Polyamid und Polyolefinen, die mit funktionellen Gruppen gepfropft sind, nach längerem Durchströmen mit Kühlmitteln bei hohen Temperaturen verloren geht und sodann eine Delamination erfolgt.

Es war daher erwünscht, verarbeitungsstabile, hydrolysebeständige Polyamid-Formmassen mit einer guten Prozessstabilität und Temperaturbeständigkeit und gleichzeitig stabilem Verarbeitungsverhalten bereitzustellen. Die Formmassen sollen insbesondere zur Herstellung von ein- oder mehrschichtigen Kühlflüssigkeitsleitungen, verwendet werden können. Bei der thermoplastischen Umformung sollen weiterhin keine Beläge entstehen bzw. diese sollen stark vermindert werden.

Versuche der Erfinder der vorliegenden Anmeldung haben dabei gezeigt, dass durch die Wechselwirkung zwischen den Aminoendgruppen des Polyamids (die für die Hydrolysebeständigkeit im Überschuss, das heißt in hoher Konzentration vorliegen müssen) und den Kupferverbindungen die Viskosität der Polyamid-Formmassen stark erhöht wird. Diese Viskositätsbeeinflussung und Bildung von Gelpartikeln ist abhängig von der Konzentration der Aminoendgruppen und den Verarbeitungsbedingungen, wozu auch Trocknungstemperatur und Trocknungsdauer gehören. In industriellen Fertigungsprozessen sind solch schwankende Viskositäten aber nicht akzeptierbar.

Auf Grund der hohen Schmelzviskosität sind höhere Verarbeitungstemperaturen erforderlich, wodurch zusätzlich die Bildung von Ablagerungen, die aus im Polyamid vorhandenen Restmonomeren bestehen, verstärkt wird. Restmonomere im Polyamid verursachen bei der Weiterverarbeitung, das heißt bei der thermoplastischen Umformung, Ablagerungen an den Formbacken der Werkzeuge.

Daher ist es Aufgabe der vorliegenden Anmeldung, die oben erwähnten Nachteile zu vermeiden.

Die obige Aufgabe wird durch die thermoplastischen Polyamid-Formmassen gemäß Anspruch 1 gelöst, enthaltend folgende Komponenten (A), (B), (C), gegebenenfalls (D) und/oder (E):
(A) mindestens 20 Gew.-% Polyamid und/oder mindestens ein Copolymer mit mindestens 20 Gew.-% Polyamidbausteinen, wobei das Polyamid und/oder die Polyamidbausteine auf aliphatischen C₆-C₁₂ Lactamen oder ω-Aminocarbonsäuren mit 4 bis 44 Kohlenstoffatomen, bevorzugt mit 4 bis 18 Kohlenstoffatomen, oder auf aromatischen ω-Aminocarbonsäuren mit 6 bis 20 Kohlenstoffatomen basieren oder Polykondensate sind, erhältlich aus der Polykondensation von mindestens einem Diamin aus der Gruppe der aliphatischen Diamine mit 4 bis 18 C-Atomen, der cycloaliphatischen Diamine mit 7 bis 22 C-Atomen in Kombination mit mindestens einer Dicarbonsäure aus der Gruppe aus aliphatischen Dicarbonsäuren mit 4 bis 44 C-Atomen, cycloaliphatischen Dicarbonsäuren mit 8 bis 24 C-Atomen und aromatischen Dicarbonsäuren mit 8 bis 20 C-Atomen, wobei jeweils das Polyamid und/oder das mindestens eine Copolymer mit mindestens 20 Gew.-% Polyamidbausteinen einen Aminoendgruppengehalt im Bereich von 25 bis 300 µÄqu./g, bevorzugt von 50 bis 300 µÄqu./g und einen Carboxylendgruppengehalt von kleiner 20 µÄqu./g, bevorzugt von kleiner als 15 µÄqu./g, jeweils bezogen auf den Polyamidanteil und/oder den Anteil an Polyamidbausteinen, aufweist;
(B) 0,01 Gew.-% bis 2 Gew.-%, bezogen auf den Polyamidanteil und/oder den Anteil an Polyamidbausteinen der Zusammensetzung eines kupferhaltigen Stabilisierungsmittels, insbesondere umfassend ein Alkalimetallhalogenid und ein Kupferhalogenid, besonders bevorzugt ein Kupfer(I)halogenid, und/oder ein Kupfer(I)stearat, und/oder ein Kupfer(I)oxid, besonders bevorzugt in einem Gewichtsverhältnis von Alkalimetallhalogenid zur Summe der Kupferverbindungen von 2,5:1 bis 100:1;
(C) 0,01 Gew.-% bis 3 Gew.-%, bezogen auf den Polyamidanteil und/oder den Anteil an Polyamidbausteinen der Zusammensetzung, mindestens einer organischen Verbindung mit Metall-komplexierenden Gruppen, ausgewählt aus der Gruppe der Hydrazin-, Säurehydrazid- oder Hydrazon-Gruppen sowie der Gruppe der Benzotriazole, so dass die Kupferionen in komplexierter Form durch Bindung an die Metall-komplexierenden Gruppen vorliegen; und gegebenenfalls
(D) 0,05 Gew.-% bis maximal 15 Gew.-%, bevorzugt 0,1 Gew.-% bis 3 Gew.-%, jeweils bezogen auf den Polyamidanteil und/oder den Anteil an Polyamidbausteinen Zusammensetzung, mindestens einer Verbindung eines Weichmachers, ausgewählt aus der Gruppe, bestehend aus Benzolsulfonsäurealkylamiden, o-, p-Toluolsulfonsäurealkylamiden, Alkylhydroxybenzoaten, Benzolcarbonsäureestern, Phthalsäureestern, Fettsäureestern, Estern mehrwertiger Alkohole, Dicarbonsäurediestern mit einer Kohlenstoffzahl der Säuren von 4 bis 44 Atomen, Trialkylmellithsäureestern, Phosphorsäureestern, Zitronensäureestern, Tetraalkylalkylendiaminen, Tetra(2-hydroxyalkyl)alkylendiaminen, Trialkylaminen und Gemischen der vorgenannten Verbindungen, und/oder
(E) 0,05 Gew.-% bis maximal 15 Gew.-%, bevorzugt 0,3 Gew.-% bis 3 Gew.-%, jeweils bezogen auf den Polyamidanteil und/oder den Anteil an Polyamidbausteinen der Zusammensetzung, mindestens einer aprotischen Verbindung, ausgewählt aus der Gruppe der N-alkylierten, cyclischen Carbonsäureamide mit 5-7 Ringgliedern und/oder der Gruppe der Harnstoffderivate, deren Alkylreste am Stickstoff linear oder verzweigt sind und gegebenenfalls Heteroatome und Heterogruppen enthalten können oder eine Verknüpfung der beiden N-Atome bilden.

Bei den Metall-komplexierenden Gruppen von Komponente (C) handelt es sich erfindungsgemäß um Hydrazin-, Säurehydrazid- oder Hydrazon-Einheiten und um Benzotriazole. Verbindungen mit solchen Strukturen wirken als Metalldesaktivator (vgl. Plastics Additives Handbook, 4th, Ed., 1993, Kap. 2.4).

Durch Zusatz der Metall-komplexierenden Gruppen von Komponente (C) werden die Kupferionen des kupferhaltigen Stabilisierungsmittels (B) gebunden. Zusätzlich zu den Metallkomplexierenden Gruppen können die Verbindungen der Komponente (C) weitere funktionelle Gruppen wie alkoholische oder phenolische Gruppen und/oder Arylamine enthalten.

In einer bevorzugten Ausführungsform der Erfindung liegt die Komponente (C) in einem molaren Verhältnis zur Summe der Kupfer(I)verbindungen von 0,5:1 bis 3:1 vor. Besonders bevorzugt wird die Komponente (C) in mindestens etwa äquimolarer Menge zur Kupfermenge von Komponente (B) bei der Herstellung der thermoplastischen Formmassen zugegeben.

Beispiele für Verbindungen von Komponente (C) der erfindungsgemäßen Art sind 2',3-Bis[[3-[3,5-di-tert-butyl-4-hydroxyphenyl]propionyl]]propiono-hydrazid und/oder 3-(Salycyloylamino)-1,2,4-triazol.

Überraschenderweise hat sich gezeigt, dass durch Zugabe einer organischen Verbindung mit Metall-komplexierenden Gruppen wie zum Beispiel Hydrazin-, Säurehydrazid- oder Hydrazon-Einheiten oder Benzotriazole zu einem Polyamid, das einerseits einen Überschuss an Aminoendgruppen, das heißt im Bereich von 25 bis 300 µÄqu./g Aminoendgruppen, insbesondere von 50 µÄqu./g und bis zu 300 µÄqu./g Aminoendgruppen sowie einen Carboxylendgruppengehalt von kleiner 20 µÄqu./g., vorzugsweise von kleiner 15 µÄqu./g aufweist und das andererseits eine Kupferstabilisierung, zum Beispiel auf Basis von Kupfer(I)jodid und Kaliumjodid besitzt, die Verarbeitungsstabilität deutlich verbessert werden kann, ohne dass sich die Langzeit-Temperaturbeständigkeit oberhalb von 120°C und die Hydrolysebeständigkeit verschlechtert. Im Rahmen der vorliegenden Erfindung werde erstmalig erkannt, dass, auch wenn das Kupfer durch die Komponente (C) in komplexierter Form vorliegt, die erwünschte Hitzestabilisierung durch das Kupfer erhalten bleibt.

Prinzipiell konnte mit der vorliegenden Erfindung gezeigt werden, dass mittels der erfindungsgemäßen Kupferstabilisierung und Metalldesaktivator bei Polyamiden mit ausgeglichenem Endgruppenverhältnis zusammen mit Kupferjodid keinerlei Stippenbildung bei Folienversuchen mehr eintreten und daher dieses Problem, welches insbesondere bei hochviskosem Polyamid 12 auftritt, nunmehr behoben ist.

Erfindungsgemäß werden Polyamide eingesetzt, die einen Überschuss an Aminoendgruppen aufweisen. Durch den hohen Überschuss an Aminoendgruppen der Polyamide und/oder der Polyamidbausteine wird erfindungsgemäß eine hohe Hydrolysebeständigkeit erzielt. Durch diese Eigenschaft wird die Lebensdauer der erfindungsgemäßen Rohrleitungen gegenüber vergleichbaren Rohren deutlich verlängert.

Die Menge des Kupfers enthaltenden Stabilisatorsystems wird in der Praxis derart ausgewählt, dass ein Gehalt von 50 bis 1000 ppm Kupfer relativ zum Polyamid vorhanden ist. Das Gewichtsverhältnis des Alkalimetallhalogenids zum Kupfer(I)halogenid und/oder Kupfer(I)stearat und/oder Kupfer(I)oxid liegt in einem Bereich von 2,5:1 bis 100:1. Im allgemeinen wird der kombinierte Gewichtsanteil der Kupferverbindung und des Alkalimetallhalogenids im stabilisierten Polyamid 0,01 bis 2,0 Gew.-%, vorzugsweise 0,1 bis 1,5 Gew.-%, basierend auf dem Gesamtgewicht der Zusammensetzung, betragen.

Das erfindungsgemäß eingesetzte Alkalimetallhalogenid ist vorzugsweise Natrium- oder Kaliumjodid und das Kupfer(I)halogenid ist vorzugsweise Kupfer(I)jodid. Es kann erfindungsgemäß aber auch Kupfer(II)acetat in Verbindung mit Kaliumjodid eingesetzt werden. Gegebenenfalls kann dem kupferhaltigen Stabilisierungsmittel ein Synergist zugesetzt sein, wobei der Synergist in einer Menge von 1 bis 20 Gew.-%, bezogen auf die Gesamtpolymerzusammensetzung, vorhanden ist. Der Synergist kann zum Beispiel ein Phosphin sein.

Zur Verringerung der Bildung von Feststoffablagerungen können den Polyamid-Formmassen zusätzlich Verbindungen wie Weichmacher und/oder aprotische Verbindungen wie Carbonsäureamide oder Harnstoffe in Mengen von 0,05 Gew.-% bis 15 Gew.-%, bezogen auf den Polyamidanteil und/oder den Anteil der Polyamidbausteine, hinzugefügt werden (vgl. die oben genannten Komponenten (D) und (E)).

Aufgrund des simultanen Entweichens von Monomeren und/oder Oligomeren und/oder Abbauprodukten der Polyamide und der Verbindungen (D) und/oder (E) bei der thermoplastischen Umformung schlagen sich an den kälteren Formteiloberflächen keine festen Beläge nieder, sondern feine mittel- bis niedrigviskose Tröpfchen oder Flüssigkeitsfilme, die entweder spontan wegfließen, leicht weggewischt werden können oder wenn sie auf der Oberfläche verbleiben, auch in die Polyamid-Formmasse zurückdiffundieren. Diese Filme enthalten die aus der Polyamid-Matrix sublimierten Monomere, Oligomere oder Abbauprodukte in gelöster, dispergierter oder suspendierter Form. So werden störende Feststoffablagerungen, die bei fortlaufender Verarbeitung aufgrund der herrschenden Bedingungen zu Verkrustungen oder Vercrackungen Anlass geben, in nicht störende oder leicht zu entfernende, niederviskose Beläge umgewandelt.

Die Verbindungen (D) und/oder (E) weisen Löslichkeitsparameter vergleichbar mit den verwendeten Polyamidkomponenten auf und sind daher ausreichend verträglich und polar, so dass selbst die Monomeren, Oligomeren und die Abbauprodukte der Polyamide teilweise oder ganz von ihnen gelöst werden können. Wegen der guten Verträglichkeit der Verbindungen (D) und/oder (E) mit der Polyamid-Matrix und den sublimierenden Monomeren, Oligomeren oder

Abbauprodukten genügen bereits kleine Konzentrationen dieser Additive um störende Feststoffablagerungen zu verhindern.

Einige der erfindungsgemäßen Verbindungen (D) und/oder (E) können die bei der Verarbeitung entstandenen Sublimate auch aufgrund ihrer hohen Reaktivität lösen. Beispielsweise werden protonenabgebende Bestandteile des Sublimates durch (Hydroxyalkyl)ethylendiamine neutralisiert. Damit können die ansonsten schwer löslichen Dicarbonsäuren, wie zum Beispiel Terephthalsäure, in Lösung oder zumindest in eine dispergierte Form gebracht werden und somit die Bildung fester Beläge verhindert werden.

Dies ist insbesondere bei den sogenannten HT-Polyamiden, die auf 6T basieren, wie PA 6T/6I, von Vorteil, da hier durch die erfindungsgemäße Verwendung von Tetra(2-hydroxyalkyl)ethylendiaminen, insbesondere von N,N,N',N'-tetrakis(2-hydroxypropyl) ethylendiamin, eine Lösung der sublimierten Terephthalsäure durch Neutralisation eintritt.

Durch die erfindungsgemäße neue Verwendung der belagsreduzierenden Verbindungen (D) und/oder (E) wird zwar nicht die Sublimation der im Polyamid 12 verbliebenen Restmonomere oder Oligomere oder die bei der Verarbeitung gebildeten Abbauprodukte verhindert, aber die zusätzlichen Rezepturbestandteile sind in der Lage, diese Stoffe zu verflüssigen.

Anteile der Verbindungen (D) und/oder (E), aber auch Monomere und Oligomere, die während der Verarbeitung an die Prüfteiloberfläche migrieren, erfahren im Temperaturbereich von zum Beispiel 50°C bis 100°C, also bei Bedingungen entsprechend üblichem Praxisgebrauch, Rückdiffusion in die Polyamid-Formmasse, was als erwünschtes Verhalten zu betrachten ist. Im Fall von Polyamid 12 kann man sich dieses unerwartete Ergebnis so erklären, dass sich die Verbindungen (D) und/oder (E), insbesondere N-Octylpyrrolidon, N-Butylbenzolsulfonamid (BBSA) oder N-Butyltoluolsulfonamid, in der Polyamid 12-Matrix lösen und, da N-Octylpyrrolidon auch Lactam 12 zu lösen vermag, dessen Rückdiffusion in die Matrix ermöglicht. Die Verbindungen (D) und/oder (E) wirken daher wahrscheinlich so, dass die Sublimation von Lactam 12 zwar nicht unterbunden ist, sich aber anstelle von Feststoffablagerungen feine und farblose und niederviskose Tröpfchen bilden, die spontan wegfließen, leicht weggewischt werden können oder, wenn sie auf der Oberfläche verbleiben, auch in die Masse zurückdiffundieren.

Damit kann nun das Problem der Feststoffablagerungen bei Polyamid-Formmassen, insbesondere Polyamid 12-Formmassen, und Copolymeren, die mindestens 20 Gew.-% Polyamid-12-Bausteine bzw. Komponenten, bezogen auf die gesamte Formmasse, enthalten, über eine reine Rezepturergänzung für technische Anwendungen weitgehend gelöst werden. Damit sind keine zusätzlich durchzuführenden Verfahrensschritte und damit auch keine zusätzliche thermische Belastung der Formmassen notwendig.

Die Verbindungen (D) und/oder (E) verhindern daher erfindungsgemäß bei einer Zugabemenge von jeweils 0,05 bis maximal 15 Gew.-%, bezogen auf die Polyamid Komponente, die Bildung von Feststoffablagerungen wirksam, die insbesondere durch Lactam 12 (Laurinlactam) bedingt ist. Bevorzugt sind Zugabemengen von 0,1 Gew.-% bis 3,0 Gew.-%, besonders bevorzugt sind Zugabemengen von 0,15 Gew.-% bis 2,0 Gew.-%.

Beispiele von Phthalsäureestern zur Verwendung als ablagerungsreduzierendes Additiv, im folgenden abgekürzt als "aA" bezeichnet, schließen überwiegend Phthalsäureester mit linear oder verzweigen C₄- bis C₁₄-Alkoholen wie Diethylphthalat, Dibutylphthalat, Butyloctylphthalat, Butylisodecylphthalat, Diisooctylphthalat, Dicaprylphthalat, n-Octyl-n-decylphthalat, Diethylphthalat, Diisobutylphthalat, Diheptylphthalat, Di-2-ethylhexylphthalat, Diisodecylphthalat, Butylbenzylphthalat, Diisononylphthalat, Di-2-ethylhexyltetrahydrophthalat und Dimethoxyethylphthalat ein.

Beispiele von Fettsäureestern zur Verwendung als "aA" schließen Di-2-ethylhexyladipat, Diisodecyladipat, Diisononyladipat, Di-2-ethylhexylsebacat, Di-2-ethylhexyl-azelat, bis-2-Ethylhexyldodecandioat, bis-2-Ethylhexylfumarat, Dibutylmaleat, Acetylbutyl-ricinoleat, Tributylacetylcitrat und 2-Ethylhexylacetat ein.

Beispiele von Estern mehrwertiger Alkohole zur Verwendung als "aA" schließen 2,2,4-Trimethyl-1,3-pentandiolmonoisobutyrat, 2,2,4-Trimethyl-1,3-pentandioldiisobutyrat, Glycerintriacetat und Glycerintributyrat ein.

Beispiele der Phosphorsäureester zur Verwendung als "aA" schließen Triphenylphosphat, Cresyldiphenylphosphat, Tricresylphosphat, Trimethylphosphat, Triethylphosphat, Tributylphosphat, Tri-2-ethylhexylphosphat, Tributoxyethylphosphat und 2-Ethylhexyldiphenylphosphat ein.

Beispiele der Trimellithsäureester zur Verwendung als "aA" schließen Tribtuyltrimellitat, Tri(2-ethylhexyl)trimellitat und Tri(n-octyl)trimellitat ein.

Beispiele des Epoxy-Weichmachers zur Verwendung als "aA" schließen Di-n-octylepoxyhexahydrophthalat und Di-2-ethylhexylepoxyhexahydrophthalat ein.

Bevorzugte Vertreter der oben aufgezählten "aA" gemäß der vorliegenden Erfindung schließen Phthalsäureester wie zum Beispiel Diisobutylphthalat, Diheptylphthalat, Di-2-ethylhexylphthalat und Diisodecylphthalat, Fettsäureester wie Di-2-ethylhexyladipat, Isodecyladipat, Di-2-ethylhexylsebacat und Di-2-ethylhexylazelat, Ester mehrwertiger Alkohole wie zum Beispiel 2,2,4-Trimethyl-1,3-pentandiolmonoisobutyrat und 2,2,4-Trimethyl-1,3-pentandioldiisobutyrat und Phosphorsäureester wie zum Beispiel Tributylphosphat, Tri-2-ethylhexylphosphat und Tributoxyethylphosphat ein.

Besonders bevorzugt von Verbindungen der Gruppe (D) sind, die bevorzugt als "aA" in der vorliegenden Erfindung verwendet werden, Phthalsäureester wie zum Beispiel Diisobutylphthalat, Di-2-ethylhexyladipat, Di-2-ethylhexylsebacat und Di-2-ethylhexylazelat, mehrwertige Alkohole wie zum Beispiel 2,2,4-Trimethyl-1,3-pentandiolmonoisobutyrat und 2,2,4-Trimethyl-1,3-pentandioldiisobutyrat und Phosphorester wie zum Beispiel Tri-2-ethylhexylphosphat.

Beispiele der Benzolsulfonsäurealkylamide zur Verwendung als "aA" schließen Benzolsulfonsäurepropylamid, Benzolsulfonsäurebutylamid und Benzolsulfonsäure-2-ethylhexylamid ein.

Beispiele der Toluolsulfonsäurealkylamide zur Verwendung als "aA" schließen N-Ethyl-o- oder N-Ethyl-p-toluolsulfonsäurebutylamid und N-Ethyl-o- oder N-Ethyl-p-toluolsulfonsäure-2-ethylhexylamid ein.

Bespiele der Alkylhydroxybenzoate zur Verwendung als "aA" schließen Ethylhexyl-o- oder p-Hydroxybenzoat, Hexyldecyl-o- oder p-Hydroxybenzoat, Ethyldecyl-o- oder p-Hydroxybenzoat, Methyl-o- oder p-Hydroxybenzoat, Butyl-o- oder p-Hydroxybenzoat, Hexyl-o- oder p-Hydroxybenzoat, n-Octyl-o- oder p-Hydroxybenzoat, Decyl-o- oder p-Hydroxybenzoat, Diethylenglykoldibenzoat und Dodecyl-o- oder p-Hydroxybenzoat ein.

Beispiele für Dicarbonsäurediester sind Hexandisäurediester, zum Beispiel Benzyloctyladipat (Adimoll BO^{®}), Dimethyladipat (Adimol DM^{®}), Nonadisäurediester, zum Beispiel Di-n-hexylazelat (Edenol 9051^{®}), Decandisäurediester, zum Beispiel Dioctylsebacat (Edenol 888^{®}).

Beispiele für Trialkyltrimellitat sind 1,2,4-Benzoltricarbonsäure-tris(alkylester), zum Beispiel Trioctyltrimellitat (Palatinol TOTM-I^{®}).

Ein Beispiel für die verwendeten Tetra(2-hydroxyalkyl)ethylendiamine ist N,N,N',N'-tetrakis(2-hydroxypropyl)ethylendiamin (Quadrol^{®}).

Ein Beispiel für Penta(2-hydroxyalkyl)alkylentriamin ist Pentrol^{®}, das Additionsprodukt von Propylenoxid an Diethylentriamin.

Bevorzugte Vertreter der oben aufgezählten "aA" gemäß der vorliegenden Erfindung schließen Benzolsulfonsäurealkylamide wie zum Beispiel Benzolsulfonsäurebutylamid und Benzolsulfonsäure-2-ethylhexylamid, Toluolsulfon-säurealkylamide wie zum Beispiel N-Ethyl-p-toluolsulfonsäurebutylamid und N-Ethyl-p-toluolsulfonsäure-2-ethylhexylamid und Alkylhydroxybenzoate wie zum Beispiel Ethylhexyl-p-hydroxybenzoat, Hexyldecyl-p-hydroxybenzoat und Ethyldecyl-p-hydroxybenzoat ein.

Besonders bevorzugte Mitglieder von diesen schließen Benzolsulfonsäurebutylamid, Ethylhexyl-p-hydroxybenzoat und Hexyldecyl-p-hydroxybenzoat ein.

Die "aA" verhindert insbesondere bei einer Zugabemenge von 0,15 Gew.-% bis 2,0 Gew.-% in der Polyamid-Matrix-Komponente die Bildung von Feststoffablagerungen wirksam.

Eine aprotische Verbindung aus der Gruppe der N-alkylierten, cyclischen Carbonsäureamide mit 5-7 Ringgliedern entspricht vorzugsweise einem Carbonsäureamid der Formel I: 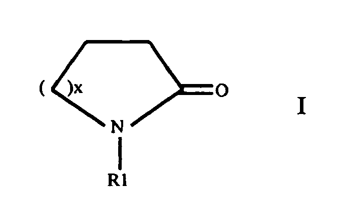 wobei x 1 bis 3 ist und R1 1 bis 12 C-Atome und weiterhin auch Heteroatome und Heterogruppen, insbesondere -O- Brücken, enthalten kann. Geeignete Verbindungen sind N-Alkylpyrrolidone bzw. N-Alkylcaprolactame, bei denen R1 Isopropyl, Butyl, tert-Butyl, Hexyl, Octyl, Dodecyl, Cyclohexyl, 2-Hydroxyethyl, 3-Hydroxypropyl, 2-Methoxyethyl oder 3-Methoxypropyl ist. Speziell geeignete Verbindungen sind N-Octylpyrrolidon und N-Octylcaprolactam.

N-Octylpyrrolidon bzw. BBSA ist als erfindungsgemäßer Zusatz speziell geeignet. So weisen Lactam 12 und N-Octylpyrrolidon beide ein Molgewicht von 197 g/mol auf und beide sind cyclische Amide. Weiterhin verflüchtigen sich N-Octylpyrrolidon bzw. BBSA und Lactam 12 in etwa demselben Temperaturbereich. Während sich N-Octylpyrrolidon bzw. BBSA bei hoher Temperatur verflüchtigt, erfolgt im Temperaturbereich von 100 bis 150°C Rückdiffusion in die Polyamid 12- Matrix. Ein wesentlicher Unterschied dieser Verbindungen ist der Schmelzpunkt. So weist Lactam 12 einen Schmelzpunkt von 150 °C auf und ist somit ein Feststoff bei Raumtemperatur, während N-Octylpyrrolidon bzw. BBSA eine Flüssigkeit bei Raumtemperatur ist. Eine wesentliche Eigenschaft von N-Octylpyrrolidon bzw. BBSA im Hinblick auf die vorliegende Erfindung ist, dass es fähig ist, Lactam 12 zu lösen bzw. zu verflüssigen. N-Octylcaprolactam zeigt ein ähnliches Verhalten wie N-Octylpyrrolidon, bei etwas geringerer Löslichkeit für das Lactam 12.

Damit gewährleistet ist, dass sich beim Verarbeiten Tröpfchen oder feine Flüssigkeitsfilme und keine Feststoffablagerungen bilden, ist nicht nur eine ausreichende Löslichkeit von Lactam in den Verbindungen (D) und/oder (E) erforderlich, sondern ebenso entscheidend sind eine dem Lactam angepasste Flüchtigkeit der Verbindungen (D) und/oder (E), eine hinreichende Löslichkeit in der PA12-Matrix sowie ein günstiges Migrationsverhalten. Vorteilhaft ist eine leicht höhere oder äquivalente Flüchtigkeit der aprotischen Verbindung in Relation zum Lactam.

Die Flüchtigkeit darf aber keinesfalls zu hoch sein, damit die Vorteile hinsichtlich der Ablagerungsproblematik nicht durch die Nachteile einer zu starken Emissionsbildung mehr als kompensiert werden.

Die erfindungsgemäß eingesetzten Verbindungen (D) und/oder (E) führen auch bei höheren Konzentrationen nicht zu einem Abbau der zugrundeliegenden Polyamid-Formmassen, so dass die mechanischen Eigenschaften voll erhalten bleiben.

Weitere bevorzugt eingesetzte Verbindungen der Gruppe (E) sind Harnstoffderivate der Formel II

R'/R2- N - CO - N -R2/R' II

wobei R2 und R' unterschiedlich oder identisch, linear oder verzweigt sein können und 1 bis 8 C-Atome besitzen oder je 2 R' eine Ethylen- oder Propylenbrücke sein kann, die die beiden N-Atome verknüpft. Besonders bevorzugt ist die Verbindung, bei der R2 und R' Butyl-Reste sind. Weiterhin sind der cyclische N,N-Dimethyl-ethylen- und -propylen-Harnstoff sowie Tetrabutylharnstoff und Mischungen solcher Harnstoffderivate besonders geeignet. In einer besonders bevorzugten Ausführungsform werden die Harnstoffderivate als Mischungen mit den cyclischen N-Alkylcarbonamiden verwendet. Wenn die Formmassen ablagerungsreduzierende Additive gemäß Formel I und/oder Formel II enthalten, bilden sich beim thermoplastischen Verarbeiten an kalten Stellen von Werkzeug- bzw. Formteiloberflächen höchstens niederviskose, farblose Tröpfchen oder Flüssigfilme, die wegfließen oder wegtropfen oder auch leicht abgewischt werden können, aber keine anhaftenden Beläge.

Im Rahmen der vorliegenden Erfindung wird unter "Polyamid" (als Oberbegriff) Homo- oder Copolyamide oder auch Blends bzw. Mischungen oder Legierungen von Homo- und/oder Copolyamiden verstanden.

Als Polyamide für die erfindungsgemäßen Formmassen werden erfindungsgemäß Polykondensate aus aliphatischen Lactamen oder ω-Aminocarbonsäuren mit 4 bis 44 Kohlenstoffatomen, bevorzugt 4 bis 18 Kohlenstoffatomen, oder solche aus aromatischen ω-Aminocarbonsäuren mit 6 bis 20 Kohlenstoffatomen eingesetzt, enthaltend
(A) mindestens 20 Gew.-% Polyamid und/oder mindestens ein Copolymer mit mindestens 20 Gew.-% Polyamidbausteinen, wobei das Polyamid und/oder die Polyamidbausteine auf aliphatischen C₆-C₁₂ Lactamen oder ω-Aminocarbonsäuren mit 4 bis 44 Kohlenstoffatomen, bevorzugt mit 4 bis 18 Kohlenstoffatomen, oder auf aromatischen ω-Aminocarbonsäuren mit 6 bis 20 Kohlenstoffatomen basieren oder Polykondensate sind, erhältlich aus der Polykondensation von mindestens einem Diamin aus der Gruppe der aliphatischen Diamine mit 4 bis 18 C-Atomen, der cycloaliphatischen Diamine mit 7 bis 22 C-Atomen in Kombination mit mindestens einer Dicarbonsäure aus der Gruppe aus aliphatischen Dicarbonsäuren mit 4 bis 44 C-Atomen, cycloaliphatischen Dicarbonsäuren mit 8 bis 24 C-Atomen und aromatischen Dicarbonsäuren mit 8 bis 20 C-Atomen, wobei insbesondere jeweils das Polyamid und/oder das mindestens eine Copolymer mit mindestens 20 Gew.-% Polyamidbausteinen einen Aminoendgruppengehalt im Bereich von 25 bis 300 µÄqu./g, insbesondere von 40 bis 300 µÄqu./g und einen Carboxylendgruppengehalt von kleiner 20 µÄqu./g, insbesondere von kleiner 15 µÄqu./g, jeweils bezogen auf den Polyamidanteil und/oder den Anteil an Polyamidbausteinen, aufweist;
(B) 0,01 Gew.-% bis 2 Gew.-%, bezogen auf den Polyamidanteil und/oder den Anteil an Polyamidbausteinen der Zusammensetzung eines kupferhaltigen Stabilisierungsmittels, insbesondere umfassend ein Alkalimetallhalogenid und ein Kupfer(I)halogenid, und/oder ein Kupfer(I)stearat, und/oder ein Kupfer(I)oxid, bevorzugt in einem Gewichtsverhältnis von Alkalimetallhalogenid zur Summe der Kupferverbindungen von 2,5:1 bis 100:1;
(C) 0,01 Gew.-% bis 3 Gew.-%, bezogen auf den Polyamidanteil und/oder den Anteil an Polyamidbausteinen der Zusammensetzung, mindestens einer organischen Verbindung mit Metall-komplexierenden Gruppen, ausgewählt aus der Gruppe der Hydrazin-, Säurehydrazid- oder Hydrazon-Gruppen sowie der Gruppe der Benzotriazole, so dass die Kupferionen in komplexierter Form durch Bindung an die Metallkomplexierenden Gruppen vorliegen.

Ebenfalls geeignet als Polyamide sind erfindungsgemäß Polykondensate aus mindestens einem Diamin und mindestens einer Dicarbonsäure mit jeweils 2 bis 44 Kohlenstoff-Atomen. Beispiele für solche Diamine sind Ethyldiamin, 1,4-Diaminobutan, 1,6-Diaminohexan, 1,10-Diaminodecan, 1,12-Diaminododecan, m- und p-Xylylendiamin, Cyclohexyldimethylenamin, Bis-(paminocycloexyl)methan und seine Alkylderivate.

Beispiele für Dicarbonsäuren sind Bernstein-, Glutar-, Adipin-, Pimelin-, Kork-, Azelain- und Sebacinsäure, Dodecandicarbonsäure, 1,6-Cyclohexandicarbonsäure, Terephthalsäure, Isophthalsäure und Naphthalindicarbonsäure.

Konkrete Beispiele für die im Rahmen der vorliegenden Erfindung eingesetzten Polyamide bzw. die zusätzlich in die Mischungen bzw. Legierungen einzubringenden (Co)Polyamide für die erfindungsgemäßen Formmassen sind daher Homo- oder Copolyamide aus der Gruppe aus PA 6, PA 66, PA 11, PA 46, PA 1212, PA 1012, PA 610, PA 612, PA 69, PA 9T, PA 10T, PA 12T, PA 12I, PA 6T/12, PA 12T/12, PA 10T/12, PA 12T/106, PA 10T/106, PA 6/66, PA 6/612, PA 6/66/610, PA 6/66/12 deren Gemische oder Copolyamide, sowie PA 6T/66, PA 6/6T, PA 6/66/6T, PA 6/6I, PA 6T/6I, PA 6I/6T, PA 16/6T/66, PA 12/6T/6I oder deren Gemische oder Copolyamide, sowie Polyamide aus der Gruppe aus PA 12/MACMI, PA 66/6I/6T, PA MXD 6/6. Auch dimerisierte Fettsäuren mit 36 und 44 C-Atomen können als Monomere verwendet werden. Für eine hohe Hydrolysebeständigkeit kommen erfindungsgemäß Polyamide zum Einsatz, die einen hohen Überschuss an Amino-Endgruppen besitzen. Dies wird dadurch erreicht, dass die Polyamide eine hohe Zahl an NH₂-Endgruppen aufweisen.

In der Praxis kann ein Aminoendgruppenüberschuss dadurch eingestellt werden, dass man beispielsweise ein Mono- oder Diamin bei der Polymerisation von Lactamen zugibt, oder dass man im Falle von Polyamiden des Typs AA-BB gezielt einen Diaminüberschuss verwendet.

Die erfindungsgemäßen Polyamid-Formmassen können als Komponente (A) mindestens 20 Gew.-% Polyamid, bevorzugt mindestens 30 Gew.-%, insbesondere bevorzugt mindestens 40 Gew.-% Polyamid enthalten. Weiterhin ist es aber auch möglich, dass ein Copolymer mit Polyamidbausteinen zusätzlich zu dem genannten Polyamid, oder alleine eingesetzt wird. Dieses Copolymer kann mindestens 20 Gew.-% Polyamidbausteine enthalten. In einer bevorzugten Ausführungsform enthält dieses Copolyamid mindestens 30 Gew.-% Polyamidbausteine, besonders bevorzugt mindestens 40 Gew.-% Polyamidbausteine. Das Copolymer kann ein Polyamid-12-Blockcopolymer sein, welches Polyester-, Polyether-, Polysiloxan-, Polycarbonat-, Polyacrylat-, Polymethacrylat- oder Polyolefinsegmente als weitere Bausteine neben einem Anteil von mindestens 20 Gew.-%, insbesondere 30 Gew.%, besonders bevorzugt 40 Gew.-%, Polyamidbausteinen enthält (vgl. Anspruch 21).

Weitere Polymere, die in der erfindungsgemäßen Polyamid-Formmasse enthalten sein können, sind funktionalisierte Polymere, zu denen Homo- oder Copolymere aus Olefinen gehören, die mit Acrylsäure oder Maleinsäureanhydrid gepfropft sind.

Natürlich können die erfindungsgemäßen thermoplastischen Polyamid-Formmassen weiterhin übliche und dem Fachmann allgemein bekannte Zusatzstoffe alleine oder in Kombination enthalten, die ausgewählt sind aus der Gruppe, bestehend aus Füllstoffe, Schlagzähmodifikator, weitere Polymere außer Polyamide, Haftvermittler, Verstärkungsmittel wie Glas- und C-Fasern, Licht-(UV-) oder Hitzestabilisatoren, Stabilisatoren gegen Bewitterung, Mineralien, Verarbeitungshilfsmittel, Kristallisations-Beschleuniger oder -Verzögerer, Oxidationsschutzmittel, Fließhilfsmittel, Gleitmittel, Entformungsmittel, Flammschutzmittel, Pigmente, Farb- und Markierungsstoffe, Antistatikmittel wie Russ oder Graphit, oder als nanoskalige Füllstoffe auch Nanoteilchen in Plättchenform, entsprechend allen bei Polyamiden bekannten Zusatzstoffen, wie sie für die jeweilige Anwendung notwendig sind.

Den zuvor beschriebenen (Co)Polyamiden oder Gemischen davon können für bestimmte Zwecke auch andere übliche Nicht-Polyamid-Polymere wie Polyester, Polyolefine, Polycarbonate, Acrylnitril (AN) und ABS-Polymerisate, funktionalisierte Copolyolefine und Ionomere zugesetzt sein.

Als weitere Zusatzstoffe können den erfindungsgemäßen thermoplastischen Polyamid-Formmassen Schlagzähmodifikatoren zugesetzt sein. Diese sind zum Beispiel Copolymere auf Polyolefinbasis von tiefer Glasumwandlungstemperatur, die Acrylsäure enthalten oder mit Maleinsäureanhydrid gepfropft sein können. Insbesondere seien hier Schlagzähmodifikatoren wie Ethylen-Propylen-Copolyolefine oder Ethylen-Propylen-Dien-Kautschuke (EPDM) oder Acrylatkautschuke genannt.

In einer weiteren bevorzugten Ausführungsform können die Formmassen weiterhin nanoskalige Füllstoffe enthalten. In einer besonderen Ausführungsform der Erfindung sind die nanoskaligen Füllstoffe entweder Siliziumdioxid oder Siliziumdioxid-Hydrate. In der Polyamid-Formmasse liegen gewisse nanoskaligen Füllstoffe in einer Ausführungsform als ein gleichmäßig dispergiertes, schichtförmiges Material vor. Vor dem Einarbeiten in die Matrix besitzen sie eine Schichtdicke von 0,7 bis 1,2 nm und einen Zwischenschichtabstand der Mineralschichten von bis zu 5 nm.

Die Verbindungen (D) und/oder (E) gemäß Anspruch 1 mit einer polaren, funktionellen Gruppe und einem apolaren Alkylrest können die Einarbeitung solcher Füllstoffe wesentlich erleichtern. Werden sie Schichtsilikaten zugefügt, so kann ihre polare Gruppe als Koordinationsstelle für das Kation dienen und so mitbewirken, dass sich der Schichtabstand erhöht und so die Auftrennung der Primärpartikel (die Exfoliierung) und ihre Verteilung in der Matrix wesentlich verbessert und beschleunigt wird.

Solche Mineralien können in jeder beliebigen Stufe der Polymerherstellung zugegeben und dabei im Nanometerbereich fein verteilt werden. Bevorzugt sind Mineralien, die bereits eine Schichtstruktur aufweisen, wie Schichtsilikate (bevorzugt Montmorillonit), Doppelhydroxide, wie Hydrotalcit oder auch Graphit. Ebenso eignen sich Nanofüllstoffe auf Basis von Silikonen, Silica oder Silsesquioxanen.

Unter Schichtsilikaten im erfindungsgemäßen Sinne werden 1:1 sowie 2:1 Schichtsilikate verstanden. In diesen Systemen sind Schichten aus SiO₄-Tetraedern mit solchen aus M(O,OH)₆-Oktaedern in regelmässiger Weise miteinander verknüpft. M steht dabei für Metallionen wie Al, Mg, Fe. Bei den 1: 1-Schichtsilikaten sind dabei jeweils eine Tetraeder- und eine Oktaederschicht miteinander verbunden. Beispiele hierfür sind Kaolin- und Serpentin-Minerale.

In einer Ausführungsform der Erfindung gibt man zur Herstellung der erfindungsgemäßen thermoplastischen Polyamid-Formmassen das "aA" auf Granulat aus (Co)Polyamid mit mindestens 20 % Polyamid 12-Anteil auf und mischt dieses, bis die Verbindung ins Granulat eindiffundiert ist. Das Mischen wird bevorzugt bei erhöhter Temperatur, bevorzugter bei 50 - 160 °C, insbesondere bei 60 - 120°C, durchführt.

Die "aA" können beispielsweise als Flüssigfilm auf das Granulat aufgetragen werden, wonach man gegebenenfalls weitere pulverförmige Additive zufügt, und sodann die Einextrusion nach üblichen, bekannten Verfahren erfolgt.

Zudem ist es möglich, die "aA" direkt vor der Polymerisation/Polykondensation der Monomere bzw. des Monomergemisches der späteren Polyamid-Matrix oder während der Polymerisation/Polykondensation der Polyamid-Reaktionsmischung zuzugeben. Bei der Herstellung von Polyamid 12 kann beispielsweise das "aA" zu 12-Aminolaurinsäure oder Lactam 12 zugegeben werden, und die erhaltene Mischung wird dann, gegebenenfalls unter Zusatz mindestens eines Kettenlängenreglers, polymerisiert. Das so erhaltene Granulat kann dann im Spritzguss- oder Extrusionsverfahren thermoplastisch umgeformt werden.

Liegt bereits ein auf die Anwendung bezogenes Granulat auf (Co)Polyamidbasis vor, bei dem Verarbeitungsprobleme wegen Ablagerungen auftreten, so kann das "aA" einfach vor der Verarbeitung in anwendungsgeeigneter Menge zunächst als Flüssigfilm auf die Granulatoberfläche aufgebracht werden, wonach bei Notwendigkeit eine thermische Nachbehandlung erfolgen kann und dabei die Verbindungen (D) und/oder (E) ins Granulat eindiffundieren, wodurch dieses seine gute Rieselfähigkeit zurückgewinnt, oder es können nachfolgend geeignete Feststoffadditive aufgebracht werden.
In einer bevorzugten Ausführungsform der Erfindung arbeitet man die "aA" (D) und/oder (E) kontinuierlich während einem Extrusionsdurchgang, bevorzugt unter Verwendung eines Zweischneckenextruders, insbesondere auch gleichzeitig mit den weiteren Rezepturbestandteilen in die Polyamid-Matrix aus (Co)Polyamid mit mindestens 20 % Polyamid 12-Anteil ein. Man kann die aprotische Verbindung auch in höherer Konzentration einarbeiten und das so hergestellte Granulat als Masterbatch verwenden.

Die erfindungsgemäßen Polyamid-Formmassen werden zur thermoplastischen Umformung zu Gebrauchsgegenständen in diskontinuierlichen Prozessen, insbesondere im Spritzguss, und in kontinuierlichen Prozessen wie der (Ko)Extrusion zu Folien, Rohren und Ummantelungen verwendet, wobei sich die thermoplastischen Polyamid-Formmassen gemäß der vorliegenden Erfindung insbesondere dadurch auszeichnen, dass bei der thermoplastischen Umformung keine Feststoffablagerungen entstehen und die Viskosität stabil, das heißt annähernd konstant bleibt.

Die vorliegende Erfindung betrifft daher auch koextrudierte, hydrolysebeständige, berstdruckfeste und flexible Kühlflüssigkeitsleitungen aus mindestens einer Polyamidschicht, wobei die eingesetzten Polyamide einen Aminoendgruppenüberschuss aufweisen und aus den oben näher spezifizierten Polyamid-Formmassen mit Kupferstabilisierung und Desaktivator hergestellt sind. In einer besonderen Ausführungsform können erfindungsgemäß auch Mehrschichtrohre mit mindestens einer Polyamidaußenschicht und einer inneren Schicht aus halogenierten und nicht halogenierten Homo- oder Copolyolefinen, aus Mischungen und Blends derselben und gegebenenfalls einer Zwischenschicht aus einem zur Außen- und Innenschicht kompatiblen Material hergestellt sein.

Die Kühlflüssigkeitsleitungen können auf Teilstücken eine ringförmig oder spiralförmig durchgehend gewellte Wandung aufweisen. In einer bevorzugten Ausführung ist die Wellung der gewellten Wandung in zwei einander ungefähr gegenüberliegenden Mantellinienbereichen unterbrochen. Gegebenenfalls kann in einer speziellen Ausführungsform die Zwischenschicht aus einem mit funktionellen Gruppen versehenen, mit den benachbarten Schichten verträglichen Polyolefin bestehen. Die Kühlflüssigkeitsleitung kann durch Koextrusion eines Polymerrohres und gegebenenfalls anschliessende Ausbildung der Wellungen durch Blas- oder Saugformen oder durch Koextrusions-Blasformen hergestellt werden.

Polyamide mit einem hohen Anteil an Aminoendgruppen weisen eine besonders gute Hydrolysestabilität auf. Durch diese Eigenschaft kann die Lebensdauer der erfindungsgemäßen Rohre gegenüber Kühlflüssigkeitsleitungen des Standes der Technik deutlich verbessert werden.

Vernetztes Polyethylen weist eine aussergewöhnlich hohe Spannungsrissbeständigkeit gegenüber aggressiven Säuren, wie auch gegenüber Laugen auf. Darüber hinaus wirkt Polyethylen mit hoher Dichte (HDPE) als ausgezeichnete Wasserbarriere, so dass die berstdruckbeständige Polyamidaussenschicht durch eine solche Innenschicht gut vor der zerstörenden Wirkung von Wasser geschützt wird. Die Verwendung von handelsüblichem unvernetzten HDPE ist jedoch nicht möglich, da Kühlflüssigkeitsleitungen mit Temperaturen jenseits des Kristallitschmelzpunktes beaufschlagt werden müssen und unvernetztes HDPE daher bei diesen Temperaturen schmilzt. Vernetzbares HDPE weist diesen Nachteil nicht auf. Aus verarbeitungstechnischen Gründen ist ein silanvernetztes PE anderen Systemen wie peroxid-, oder strahlenvernetzten PE vorzuziehen.

Polyamide mit Aminoendgruppenüberschuss weisen eine deutlich bessere und beständigere Haftung zu Polyolefinen mit funktionellen Seitengruppen, wie etwa Maleinsäureanhydrid, auf. Diese Haftung wird auch bei dauerndem Angriff durch Hitze und Wasser nicht gelöst.

Die erfindungsgemäßen Kühlflüssigkeitsleitungen finden Verwendung im gesamten Kühlsystem von Automobilen, das heißt für Kühlleitungen, Heizleitungen sowie für Entlüftungsleitungen. Je nach Einsatzort und Aufgabe können die Durchmesser der erfindungsgemäßen Leitungen variieren. Beispielsweise können die Leitungen Durchmesser im Bereich von 5 mm bis 50 mm Innendurchmesser aufweisen.

Eine ganz bevorzugte Ausführungsform der erfindungsgemäßen Kühlflüssigkeitsleitung besteht aus einem Polyamid 12 mit Aminoendgruppenüberschuss als Aussenschicht, einem mit Organosilan gepfropften und durch Aufnahme von Wasser vernetzten HDPE als Innenschicht, und einer kompatiblen Zwischenschicht aus einem mit Maleinsäureanhydrid gepfropftem Polyolefin. Wird gepfropftes Polypropylen verwendet, so hat dies im Vergleich zu gepfropftem HDPE den höheren Schmelzpunkt. Diese bevorzugte erfindungsgemäße Form umfasst Teilabschnitte, die gewellt ausgeformt sind und Teilschnitte, die glatt, das heißt nicht gewellt ausgebildet sind.

Die erfindungsgemäße Polymerleitung ist durch Koextrusion eines Polymerrohres und gegebenenfalls anschliessender Ausbildung der Wellungen durch Blas- oder Saugformen herstellbar. Alternativ ist die erfindungsgemäße Kühlflüssigkeitsleitung durch Koextrusions-Blasformen herstellbar. Wellrohre und Wellschläuche sind in der Praxis in verschiedenen Ausführungsformen bekannt. Sie können aus Metall oder aus Kunststoff bestehen. Solche Rohre und Schläuche finden u.a. in der Automobilindustrie Verwendung.

Diese Verfahren sind Stand der Technik und werden u.a. auch in DE-GM 9319190 und DE-GM 9319879 beschrieben.

Eine erfindungsgemäße druckbeaufschlagbare Kühlflüssigkeitsleitung besteht aus drei Polymerschichten mit insbesondere an den Berührungsflächen der Schichten miteinander verträglichen Polymeren, wobei die Leitung in einem Teilstück gewellt sein kann. Die erfindungsgemäße Polymerleitung weist eine hohe Flexibilität, Hydrolyse- und Berstdruckbeständigkeit auf.

Eine andere Ausführungsform einer erfindungsgemäßen Kühlflüssigkeitsleitung kommt ohne Haftvermittlerschicht aus und besteht aus nur zwei Polymerschichten. Die äussere Schicht wird dabei aus einer erfindungsgemäßen Polyamid-Formmasse gebildet. Direkt daran haftet die Innenschicht aus einem modifizierten thermoplastischen Elastomer, zum Beispiel einer Mischung von EPDM und Polypropylen (Santoprene^{®} PA-Typen, mit Haftungsmodifizierung).

Die Polymeren der einzelnen Schichten können mit verarbeitungs- und verwendungsbedingten Additiven nach dem Stand der Technik modifiziert sein. Dafür seien im speziellen Stabilisatoren, Weichmacher, Pigmente und Zusätze zur Schlagzähigkeits-Verbesserung genannt.

Die Schichtdicken der einzelnen Schichten der erfindungsgemäßen Ausführungsformen können an die Anforderungen etwa in Bezug auf Barrierewirkung, Berstdruckbeständigkeit oder Schlagzähfähigkeit angepasst werden und variieren zwischen 0,05 mm und 3 mm.

Die erfindungsgemäßen Polyamid-Formmassen können in einem Sonderfall der Extrusion durch Schmelzspinnen auch zu Fasern weiterverarbeitet werden.

Die folgenden Beispiele erläutern die vorliegende Erfindung, ohne sie einzuschränken.

### Eingesetzte Materialien:

### Polyamid 12 nach Tabelle 1

| | | |
|---|---|---|
| | | |
| Relative Viskosität, 0,5% in m-Kresol | | 2,1 |
| MVR, 275°C/5 kg | cm³/10 min | 20 |
| Amino-Endgruppen | (µÄqu./g) | 55 |
| Carboxyl- Endgruppen | (µÄqu./g) | 10 |

### Schlagzähmodifikator (SZ-Modifikator) (nur für Beispiel 3)

### Ethylen-Propylen- Copolymer mit Maleinsäureanhydrid, gepfropft

| | |
|---|---|
| MVR 275°C/5 kg: | 13 cm³/10 min |
| Schmelzpunkt DSC: | 55°C |

### Metalldesaktivator 1:

### 2',3-Bis[[3-[3,5-di-tert-butyl-4-hydroxyphenyl]propionyl]]propionohydrazid

### Metalldesaktivator 2:

### 3-(Salycyloylamino)-1,2,4-triazol

Die Prüfung der erfindungsgemäßen und nicht erfindungsgemäßen Formmassen wurden gemäß folgenden Messmethoden oder Vorschriften durchgeführt:
Relative Viskosität: nach EN ISO 307 (0,5% in m-Kresol)
COOH-Endgruppen: Titration mit 0,1 m Tetrabutylammoniumhydroxid in Benzylalkohol
NH₂-Endgruppen: Titration mit 0,05 m ethanolischer Perchlorsäure in m-Kresol/Isopropanol

- MVR:: (Melt volume rate) bei 275°C/5 kg nach ISO 1133
- SZ:: Schlagzähigkeit nach ISO 179/1eU
- KSZ:: Kerbschlagzähigkeit nach ISO 179/1eA

Streckspannung, Reissdehnung und Zug-E-Modul wurden gemäß ISO 527 ermittelt.

**Tabelle 2**

| | | | Beispiel 1 | Beispiel 2 | Beispiel 3 | Beispiel 4 | Vergleichsbeispiel |
|---|---|---|---|---|---|---|---|
| | | | | | | | |
| Polyamid 12 (s.Tabelle 1) | | Gew.-% | 97,05 | 98,55 | 95,05 | 98,68 | 99,65 |
| Kaliumjodid | | Gew.-% | 0,3 | 0,3 | 0,3 | 0,3 | 0,3 |
| Kupfer-(I)-jodid | | Gew.-% | 0,05 | 0,05 | 0,05 | 0,05 | 0,05 |
| Metalldesaktivator 1 | | Gew.-% | 0,6 | 0,6 | 0,6 | | |
| Metalldesaktivator 2 | | Gew.-% | | | | 0,22 | |
| N-Butylbenzolsulfonamid | | Gew.-% | 2 | | 2 | | |
| N-Octylpyrrolidon | | Gew.-% | | 0,5 | | | |
| SZ-Modifikator | | Gew.-% | | | 2 | | |
| | | | | | | | |
| Relative Viskosität (0,5%.m-Kresol) | Original | - | 2,30 | 2,31 | 2,19 | 2,22 | 2,35 |
| Relative Viskosität (0,5%.m-Kresol) | Nach MVR-Messung, 4 Minuten in der Schmelze | - | 2,32 | 2,31 | 2,30 | 2,30 | 2,48 |
| Relative Viskosität (0,5%.m-Kresol) | Nach MVR-Messung, 10 Minuten in der Schmelze | - | 2,31 | 2,29 | 2,23 | 2,34 | 2,52 |
| MVR (275°C/5kg/4Min) | | cm³/10min | 21 | 21 | 21 | 19 | 10,5 |
| MVR (275°C/5kg/10Min) | | cm³/10min | 24 | 23 | 20 | 17 | 12,3 |
| | | | | | | | |
| Relative Viskosität (0,5%.m-Kresol) | nach 14h/110°C | | 2,17 | 2,19 | 2,11 | | 2,296 |
| Relative Viskosität (0,5%.m-Kresol) | nach 24h/110°C | | 2,19 | 2,20 | 2,14 | | 2,354 |
| Relative Viskosität (0,5%.m-Kresol) | nach 48h/110°C | | 2,21 | 2,23 | 2,15 | | 2,327 |
| MVR (275°C/5kg/4Min) | nach 14h/110°C | cm³/10min | 16 | 21 | 20 | | 3,3 |
| MVR (275°C/5kg/4Min) | nach 24h/110°C) | cm³/10min | 19 | 21 | 16 | | 5 |
| MVR (275°C/5kg/4Min) | nach 48h/110°C | cm³/10min | 15 | 16 | 16 | | 3,4 |
| Stippenbildung nach 5-minütigem Stillstand des Extruders, bei 250°C, bei Folienextrusion | | | keine | keine | keine | keine | stark |

Zur Überprüfung der Verarbeitungsstabilität und im besonderen der Bildung von Feststoffablagerungen wurden von allen Materialien der Tabelle 2, ausgenommen der Materialien von Beispiel 4, Wellrohre mit einem Durchmesser von 30 mm und einer Wandstärke von 1,5 mm hergestellt. Die Rohrherstellung erfolgte auf einem handelsüblichen Einschnecken-Extruder mit einer Dreizonenschnecke. Die Wellrohrgeometrie wurde im Vakuumverfahren unter Verwendung eines Korrugators der Firma Uniwell erzeugt. Die Wellrohrherstellung bei den Versuchen von Tabelle 3 erfolgte dabei über einen Zeitraum von 10 Stunden. Das Verfahren zur Herstellung von Wellrohren ist dem Fachmann zum Beispiel aus der Literatur: Walter Michaeli, Extrusionswerkzeuge für Kunststoffe und Kautschuk, Carl Hanser Verlag, 2. Auflage, 1991, S. 328, S. 329, sowie der Literatur zu diesem Kapitel auf S. 345, S. 346 sowie aus dem Handbuch der Kunststoff- Extrusionstechnik, II, Extrusionsanlagen, Carl Hanser Verlag, 1986, S. 58, S. 59, S. 60 bekannt.

**Tabelle 3: Beurteilung der Bildung von Ablagerungen bei der Wellrohrherstellung**

| | | | Beispiel 1 | Beispiel 2 | Beispiel 3 | Vergleichsbeispiel |
|---|---|---|---|---|---|---|
| | | | | | | |
| Polyamid 12 (s.Tabelle 1) | | Gew.-% | 97,05 | 98,55 | 95.05 | 99,65 |
| Kaliumjodid | | Gew.-% | 0,3 | 0,3 | 0.3 | 0,3 |
| Kupfer-(I)-jodid | | Gew.-% | 0,05 | 0,05 | 0.05 | 0,05 |
| Metalldesaktivator 1 | | Gew.-% | 0,6 | 0,6 | 0.6 | |
| N-Butylbenzolsulfonamid | | Gew.-% | 2 | | 2 | |
| N-Octylpyrrolidon | | Gew.-% | | 0,5 | | |
| SZ-Modifikator | | Gew.-% | | | 2 | |
| | | | | | | |
| Belagsbildung | Versuchsdauer 3 Stunden | | keine | keine | keine | stark |
| Belagsbildung | Versuchsdauer 10 Stunden | | gering | gering | gering | stark |
| Belagstyp | | | flüssig | fest | flüssig | stark |
| | | | | | | |

## Patentansprüche

1. Thermoplastische Polyamid-Formmassen, enthaltend:
(A) mindestens 20 Gew.-% Polyamid und/oder mindestens ein Copolymer mit mindestens 20 Gew.-% Polyamidbausteinen, wobei das Polyamid und/oder die Polyamidbausteine auf aliphatischen C₆-C₁₂ Lactamen oder ω-Aminocarbonsäuren mit 4 bis 44 Kohlenstoffatomen, bevorzugt mit 4 bis 18 Kohlenstoffatomen, oder auf aromatischen ω-Aminocarbonsäuren mit 6 bis 20 Kohlenstoffatomen basieren oder Polykondensate sind, erhältlich aus der Polykondensation von mindestens einem Diamin aus der Gruppe der aliphatischen Diamine mit 4 bis 18 C-Atomen, der cycloaliphatischen Diamine mit 7 bis 22 C-Atomen in Kombination mit mindestens einer Dicarbonsäure aus der Gruppe aus aliphatischen Dicarbonsäuren mit 4 bis 44 C-Atomen, cycloaliphatischen Dicarbonsäuren mit 8 bis 24 C-Atomen und aromatischen Dicarbonsäuren mit 8 bis 20 C-Atomen, und wobei das Polyamid und/oder das mindestens eine Copolymer mit mindestens 20 Gew.-% Polyamidbausteinen einen Aminoendgruppengehalt im Bereich von 25 bis 300 µÄqu./g und einen Carboxylendgruppengehalt von kleiner 20 µÄqu./g, jeweils bezogen auf den Polyamidanteil und/oder den Anteil an Polyamidbausteinen aufweist;
(B) 0,01 Gew.-% bis 2 Gew.-%, bezogen auf den Polyamidanteil und/oder den Anteil an Polyamidbausteinen der Zusammensetzung, eines kupferhaltigen Stabilisierungsmittels;
(C) 0,01 Gew.-% bis 3 Gew.-%, bezogen auf den Polyamidanteil und/oder den Anteil an Polyamidbausteinen der Zusammensetzung, mindestens einer organischen Verbindung mit Metall-komplexierenden Gruppen, ausgewählt aus der Gruppe der Hydrazin-, Säurehydrazid- oder Hydrazon-Gruppen sowie der Gruppe der Benzotriazole, so dass die Kupferionen in komplexierter Form durch Bindung an die Metall-komplexierenden Gruppen vorliegen.

2. Thermoplastische Polyamid-Formmassen gemäß Anspruch 1, **dadurch gekennzeichnet, dass** das Polyamid und/oder das mindestens eine Copolymer mit mindestens 20 Gew.-% Polyamidbausteinen einen Aminoendgruppengehalt im Bereich von 40 bis 300 µÄqu./g und einen Carboxylendgruppengehalt von kleiner 15 µÄqu./g, jeweils bezogen auf den Polyamidanteil und/oder den Anteil an Polyamidbausteinen aufweist.

3. Thermoplastische Polyamid-Formmassen gemäß Anspruch 1 oder 2, **dadurch gekennzeichnet, dass** sie zusätzlich folgende Komponenten enthält:
(D) 0,05 Gew.-% bis maximal 15 Gew.-%, bevorzugt 0,1 Gew.% bis 3 Gew.-%, jeweils bezogen auf den Polyamidanteil und/oder den Anteil an Polyamidbausteinen der Zusammensetzung, mindestens einer Verbindung, ausgewählt aus der Gruppe der Weichmacher, bestehend aus Benzolsulfonsäurealkylamiden, o-, p-Toluolsulfonsäurealkylamiden, Alkylhydroxybenzoaten, Benzolcarbonsäureestern, Phthalsäureestern, Fettsäureestern, Estern mehrwertiger Alkohole, Dicarbonsäurediestern mit einer Kohlenstoffzahl der Säuren von 4 bis 44 Atomen, Trialkylmellithsäureestern, Phosphorsäureestern, Zitronensäureestern, Tetraalkylalkylendiaminen, Tetra(2-hydroxyalkyl)alkylendiaminen, Trialkylaminen und Gemischen der vorgenannten Verbindungen, und/oder
(E) 0,05 Gew.-% bis maximal 15 Gew.-%, bevorzugt 0,1 Gew.% bis 3 Gew.-%, jeweils bezogen auf den Polyamidanteil und/oder den Anteil an Polyamidbausteinen der Zusammensetzung, mindestens einer aprotischen Verbindung, ausgewählt aus der Gruppe der N-alkylierten, cyclischen Carbonsäureamide mit 5-7 Ringgliedern und/oder der Gruppe der Harnstoffderivate, deren Alkylreste am Stickstoff linear oder verzweigt sind und gegebenenfalls Heteroatome und Heterogruppen enthalten können oder eine Verknüpfung der beiden N-Atome bilden.

4. Thermoplastische Polyamid-Formmassen gemäß irgendeinem der Ansprüche 1 bis 3, **dadurch gekennzeichnet, dass** das kupferhaltige Stabilisierungsmittel (B) ein Alkalimetallhalogenid und ein Kupfer(I)halogenid und/oder ein Kupfer(I)stearat, und/oder ein Kupfer(I)oxid umfasst, wobei insbesondere ein Gewichtsverhältnis von Alkalimetallhalogenid zur Summe der Kupfer(I)verbindungen von 2,5:1 bis 100:1 vorliegt.

5. Thermoplastische Polyamid-Formmassen gemäß irgendeinem der vorhergehenden Ansprüche 1 bis 4, **dadurch gekennzeichnet, dass** die Verbindung mit Metallkomplexierenden Gruppen (C) in einem molaren Verhältnis zur Summe der Kupfer(I)verbindungen von 0,5:1 bis 3:1 vorliegt, wobei insbesondere die Komponente (C) in mindestens etwa äquimolarer Menge zur Kupfermenge von Komponente (B) vorliegt.

6. Thermoplastische Polyamid-Formmassen gemäß einem der Ansprüche 1 bis 5, **dadurch gekennzeichnet, dass** als Verbindung (C) 2',3-Bis[[3-[3,5-di-tert-butyl-4-hydroxyphenyl]propionyl]]propiono-hydrazid und/oder 3-(Salycyloylamino)-1,2,4-triazol eingesetzt wird.

7. Thermoplastische Polyamid-Formmassen gemäß irgendeinem der vorhergehenden Ansprüche 1 bis 6, **dadurch gekennzeichnet, dass** die Komponente (A) mindestens 30 Gew.-% Polyamid und/oder mindestens ein Copolymer mit mindestens 30 Gew.-% Polyamidbausteinen, insbesondere mindestens 40 Gew.-% Polyamid und/oder mindestens ein Copolyamid mit mindestens 40 Gew.-% Polyamidbausteinen, aufweist.

8. Thermoplastische Polyamid-Formmassen gemäß einem oder mehreren der Ansprüche 1 bis 7, **dadurch gekennzeichnet, dass** die Formmassen übliche Zusatzstoffe alleine oder in Kombination enthalten, die ausgewählt sind aus der Gruppe, bestehend aus Nicht-Polyamid-Polymeren, insbesondere aus der Gruppe der Polyester, der Polyolefine, der Polycarbonate, der ABS-Polymerisate, der funktionalisierten Copolyolefine, der Gruppe der Ionomere sowie von Acrylnitril, und der Haftvermittler, Schlagzähmodifikator, Flammschutzmittel, Füllstoffe, Verstärkungsmittel wie Glas- und Kohlenstoff-Fasem (C-Fasern), sowie der Stabilisatoren gegen Abbau durch Licht, Hitze oder Bewitterung, Mineralien und Verarbeitungshilfsmittel und Farbstoffe und Antistatikmittel.

9. Thermoplastische Polyamid-Formmassen gemäß irgendeinem der Ansprüche 1 bis 8, **dadurch gekennzeichnet, dass** sie nanoskalige Füllstoffe enthalten.

10. Thermoplastische Polyamid-Formmassen gemäß Anspruch 8, **dadurch gekennzeichnet, dass** der Schlagzähmodifikator ausgewählt ist aus funktionalisierten Polyolefinen, die mit Acrylsäure oder Maleinsäureanhydrid gepfropft sind.

11. Thermoplastische Polyamid-Formmassen gemäß Anspruch 3, **dadurch gekennzeichnet, dass** als Benzolsulfonsäureamid N-Butylbenzolsulfonsäureamid verwendet wird.

12. Thermoplastische Polyamid-Formmassen gemäß Anspruch 3, **dadurch gekennzeichnet, dass** als *ortho-, para-* Toluolsulfonsäureamid N-Butyltoluolsulfonsäureamid verwendet wird.

13. Thermoplastische Polyamid-Formmassen gemäß Anspruch 3, **dadurch gekennzeichnet, dass** als Tetra(2-hydroxyalkyl)alkylendiamin N,N,N',N'-Tetrakis(2-hydroxypropyl) ethylendiamin verwendet wird.

14. Thermoplastische Polyamid-Formmassen gemäß Anspruch 3, **dadurch gekennzeichnet, dass** das cyclische Carbonsäureamid von Komponente (E) der folgenden Formel I entspricht und x 1 bis 3 ist und R1 1 bis 12 C-Atome aufweist, linear, verzweigt oder cyclisch ist und weiterhin Heteroatome und Heterogruppen, insbesondere -O- Brücken, enthält:

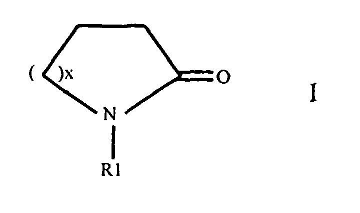

15. Thermoplastische Polyamid-Formmassen gemäß Anspruch 3, **dadurch gekennzeichnet, dass** das Harnstoffderivat von Komponente (E) der Formel II entspricht,
R'/R2- N - CO - N -R2/R' II
wobei R2 und R' unterschiedlich oder identisch, linear oder verzweigt sein können und 1 bis 8 C-Atome besitzen oder 2 R' eine Ethylen- oder Propylenbrücke zwischen den beiden N-Atomen bilden können.

16. Thermoplastische Polyamid-Formmassen gemäß Anspruch 15, **dadurch gekennzeichnet, dass** R1 ein Octyl-Rest ist.

17. Thermoplastische Polyamid-Formmassen gemäß Anspruch 15, **dadurch gekennzeichnet, dass** R2 und R' Butyl-Reste sind.

18. Thermoplastische Polyamid-Formmassen gemäß Anspruch 3, **dadurch gekennzeichnet, dass** als aprotische Verbindung mindestens eine Verbindung (Komponente E) eingesetzt wird, die ausgewählt ist aus der Gruppe, bestehend aus N-Isopropylpyrrolidon, N-Butylpyrrolidon, N-*tert*-Butylpyrrolidon, N-Hexylpyrrolidon, N-Octylpyrrolidon, N-Dodecylpyrrolidon, N-Cyclohexylpyrrolidon, N-2-Hydroxyethylpyrrolidon, N-3-Hydroxypropylpyrrolidon, N-2-Methoxyethylpyrrolidon, N-3-Methoxypropylpyrrolidon, N-Octylcaprolactam, cyclischem N,N-Dimethylethylenharnstoff, cyclischem N,N-Dimethylpropylenharnstoff und Tetrabutylharnstoff und deren Gemischen.

19. Thermoplastische Polyamid-Formmassen gemäß irgendeinem der Ansprüche 1 bis 18, **dadurch gekennzeichnet, dass** das Polyamid oder das Copolymer im wesentlichen ein Polyamid ist, ausgewählt aus der Gruppe, bestehend aus PA 6, PA 66, PA 11, PA 12, PA 46, PA 1212, PA 1012, PA 610, PA 612, PA 69, PA 9T, PA 10T, PA 12T, PA 12I, PA 6T/12, PA 12T/12, PA 10T/12, PA 12T/106, PA 10T/106, PA 6/66, PA 6/612, PA 6/66/610, PA 6/66/12 deren Gemische oder Copolyamide, sowie PA 6T/66, PA 6/6T, PA 6/66/6T, PA 6/61, PA 6T/6I, PA 6I/6T, PA 12/6T/66, PA 12/6T/6I oder deren Gemische oder Copolyamide, sowie Polyamide ausgewählt aus der Gruppe aus PA 12/MACMI, PA 66/6I/6T, PA MXD 6/6, wobei auch dimerisierte Fettsäuren mit 36 und 44 C-Atomen als Monomere verwendet werden können oder deren Gemische oder Copolyamide.

20. Thermoplastische Polyamid-Formmassen gemäß einem der Ansprüche 1 bis 19, **dadurch gekennzeichnet, dass** das Polyamid im wesentlichen Polyamid 12 ist, wobei insbesondere das Polyamid 12 hydrolytisch hergestelltes Polyamid 12 ist.

21. Thermoplastische Polyamid-Formmassen gemäß einem der Ansprüche 1 bis 20, **dadurch gekennzeichnet, dass** das Copolymer ein Polyamid 12-Blockcopolymer ist, welches Polyester-, Polyether-, Polysiloxan-, Polycarbonat-, Polyacrylat-, Polymethacrylat- oder Polyolefinsegmente als weitere Bausteine neben einem Anteil von mindestes 20 Gew.-% Polyamid 12-Bausteinen enthält.

22. Thermoplastische Polyamid-Formmassen gemäß irgendeinem der Ansprüche 1 bis 21, **dadurch gekennzeichnet, dass** die Formmassen Polyamid-Mischungen sind, bestehend aus Polyamid 12 und einem teilaromatischen Polyamid, gegebenenfalls mitenthaltend Verträglichkeitsvermittler und/oder Schlagzähmodifikatoren.

23. Thermoplastische Polyamid-Formmassen gemäß irgendeinem der Ansprüche 1 bis 22, **dadurch gekennzeichnet, dass** die Formmasse eine Polyamid-Mischung aus Polyamid 12 mit mindestens einem (Co)Polyamid enthalten, das ausgewählt ist aus der Gruppe, bestehend aus PA 6, PA 66, PA 11, PA 46, PA 1212, PA 1012, PA 610, PA 612, PA 69, PA 9T, PA 10T, PA 12T, PA 12I, PA 6T/12, PA 12T/12, PA 10T/12, PA 12T/106, PA 10T/106, PA 6/66, PA 6/612, PA 6/66/610, PA 6/66/12 deren Gemische oder Copolyamide, sowie PA 6T/66, PA 6/6T, PA 6/66/6T, PA 6/6I, PA 6T/6I, PA 6I/6T, PA 16/6T/66, PA 12/6T/6I oder deren Gemische oder Copolyamide, sowie Polyamide aus der Gruppe aus PA 12/MACMI, PA 66/6I/6T, PA MXD 6/6, wobei auch dimerisierte Fettsäuren mit 36 und 44 C-Atomen als Monomere verwendet werden können oder deren Gemische oder Copolyamide.

24. Thermoplastische Polyamid-Formmassen gemäß irgendeinem der vorhergehenden Ansprüche 1 bis 23, **dadurch gekennzeichnet, dass** die Polyamid-Mischung als ein- oder mehrphasige Mischung vorliegt, die gegebenenfalls Phasenvermittler und/oder Schlagzähmodifikatoren enthält.

25. Thermoplastische Polyamid-Formmassen gemäß Anspruch 24, **dadurch gekennzeichnet, dass** die Polyamid-Mischung aus Polyamid 12 und einem amorphen Copolyamid oder Polyamid besteht.

26. Verfahren zur Herstellung von thermoplastischen Polyamid-Formmassen gemäß irgendeinem der Ansprüche 1 bis 25, **dadurch gekennzeichnet, dass** das Verfahren das Compoundieren der Polyamid-Zusammensetzung (A), 0,01 Gew.-% bis 3,0 Gew.-% des Stabilisators (B), bezogen auf den Polyamidanteil und/oder den Anteil an Polyamidbausteinen der Zusammensetzung, mit mindestens einer organischen Verbindung mit Metall-komplexierenden Gruppen (C) und gegebenenfalls eines Weichmachers (D) und/oder einer aprotischen Verbindung (E), bevorzugt bei erhöhter Temperatur, umfasst, wobei die Komponente (C) in mindestens etwa äquimolarer Menge zur Kupfermenge von Komponente (B) zugegeben wird.

27. Verfahren zur Herstellung von thermoplastischen Polyamid-Formmassen gemäß Anspruch 26, **dadurch gekennzeichnet, dass** man den Weichmacher (D) und/oder die aprotische Verbindung (E) auf das Granulat aus (Co)Polyamid aufgibt und dieses, bevorzugt bei erhöhter Temperatur, solange mischt, bis die Verbindung ins Granulat eindiffundiert ist.

28. Verfahren gemäß Anspruch 27 **dadurch gekennzeichnet, dass** das Verfahren im Bereich von Raumtemperatur bis maximal 160 °C, insbesondere bei 60 bis 120°C, durchgeführt wird.

29. Verfahren zur Herstellung von thermoplastischen Polyamid-Formmassen gemäß Anspruch 26, **dadurch gekennzeichnet, dass** man den Weichmacher (D) und/oder die aprotische Verbindung (E) in einem hohen Anteil von 3 bis 30 Gew.-% in ein der Komponente (A) entsprechendes Polyamid einarbeitet und man dieses Granulat so dann als Masterbatchform zugibt.

30. Verfahren zur Herstellung von thermoplastischen Polyamid-Formmassen gemäß Anspruch 26, **dadurch gekennzeichnet, dass** man den Weichmacher (D) und/oder die aprotische Verbindung (E) kontinuierlich während einem Extrusionsdurchgang, bevorzugt unter Verwendung eines Zweischneckenextruders, insbesondere auch gleichzeitig mit den weiteren Rezepturbestandteilen in die Polyamid-Formmassen einarbeitet.

31. Verwendung der thermoplastischen Polyamid-Formmassen gemäß Anspruch 1 bis 25 zur thermoplastischen Umformung zu Gebrauchsgegenständen in diskontinuierlichen Prozessen, insbesondere im Spritzguss, und in kontinuierlichen Prozessen wie der Extrusion zu Folien, Rohren, Fasern und Ummantelungen.

32. Gebrauchsgegenstände, umfassend Formmassen gemäß einem oder mehreren der Ansprüche 1 bis 25, herstellbar durch das Verfahren gemäß einem oder mehreren der Ansprüche 26 bis 30.

33. Extrudierte, gegebenenfalls koextrudierte, hydrolysebeständige, berstdruckfeste und flexible Kühlflüssigkeitsleitungen, umfassend mindestens eine (äußere) Polyamidschicht, wobei die Polyamidschicht aus den Polyamid-Formmassen gemäß einem oder mehreren der Ansprüche 1 bis 25 erhältlich ist, gegebenenfalls eine innere Schicht, enthaltend halogenierte oder nicht halogenierte Homo- oder Copolyolefine, aus Mischungen oder Blends derselben, gegebenenfalls mit Haftvermittlermodifizierung, oder gegebenenfalls eine Zwischenschicht aus einem zur Außen- und Innenschicht kompatiblen Material.

34. Kühlflüssigkeitsleitung gemäß Anspruch 33, **dadurch gekennzeichnet, dass** sie zumindest auf Teilstücken eine ringförmig oder spiralförmig gewellte Wandung aufweist.

35. Kühlflüssigkeitsleitung gemäß Anspruch 34, **dadurch gekennzeichnet, dass** die Wellung in zwei einander ungefähr gegenüberliegenden Mantellinienbereichen unterbrochen ist.

36. Kühlflüssigkeitsleitung gemäß einem der Ansprüche 33 bis 35, **dadurch gekennzeichnet, dass** die Zwischenschicht aus einem mit funktionellen Gruppen versehenen, mit den benachbarten Schichten verträglichen Polyolefin besteht.

37. Kühlflüssigkeitsleitung gemäß einem der vorhergehenden Ansprüche 33 bis 36, **dadurch gekennzeichnet, dass** sie durch Koextrusion eines Polymerrohres und gegebenenfalls anschließender Ausbildung der Wellungen durch Blas- oder Saugformen oder durch Extrusions- oder Koextrusions- Blasformen herstellbar ist.

## Claims

1. Thermoplastic polyamide moulding materials containing:
(A) at least 20% by wt. polyamide and/or at least one copolymer containing at least 20% by wt. polyamide structural units, wherein the polyamide and/or the polyamide structural units are based on aliphatic C₆-C₁₂ lactams or ω-aminocarboxylic acids containing 4 to 44 carbon atoms, preferably containing 4 to 18 carbon atoms, or are based on aromatic ω-aminocarboxylic acids containing 6 to 20 carbon atoms or are polycondensates obtainable from the polycondensation of at least one diamine from the group of aliphatic diamines containing 4 to 18 C atoms, cycloaliphatic diamines containing 7 to 22 C atoms in combination with at least one dicarboxylic acid from the group of aliphatic dicarboxylic acids containing 4 to 44 C atoms, cycloaliphatic dicarboxylic acids containing 8 to 24 C atoms, and aromatic dicarboxylic acids containing 8 to 20 C atoms, wherein the polyamide and/or the at least one copolymer containing at least 20% by wt. polyamide structural units have an amino end group content in the range of 25 to 300 µEq/g and a carboxyl end group content of less than 20 µEq/g, in each case relative to the polyamide portion and/or the portion of polyamide structural units;
(B) 0.01 % by wt. to 2% by wt, relative to the polyamide portion and/or the portion of polyamide structural units, of the composition of a copper-containing stabiliser;
(C) 0.41% by wt. to 3% by wt., relative to the polyamide portion and/or the portion of polyamide structural units, of the composition of at least one organic compound containing metal complexing groups, selected from the group of hydrazine, acid hydrazide, or hydrazone groups, as well as from the group of benzotriazoles, so that the copper ions are present in complexed form through binding to the metal-complexing groups.

2. Thermoplastic polyamide moulding materials according to Claim 1, **characterised in that** the polyamide and/or the at least one copolymer containing at least 20% by wt. polyamide structural units have an amino end group content in the range of 40 to 300 µEq/g and a carboxyl end group content of less than 15 µEq/g, in each case relative to the polyamide portion and/or the portion of polyamide structural units.

3. Thermoplastic polyamide moulding materials according to Claim 1 or 2, **characterised in that** said materials additionally contain the following components:
(D) 0.05% by wt. to a maximum 15% by wt., preferably 0.1% by wt. to 3% by wt., in each case relative to the polyamide portion and/or the portion of polyamide structural units, of the composition of at least one compound selected from the group of softeners comprising benzenesulfonic acid alkylamides, o-, p-toluenesulfonic acid alkylamides, alkylhydroxybenzoates, benzenecarboxylic acid esters, phthalic acid esters, fatty acid esters, esters of polyvalent alcohols, dicarboxylic acid diesters with a carbon number of the acids of 4 to 44 atoms, trialkylmellitic acid esters, phosphoric acid esters, citric acid esters, tetraalkyl alkylenediamines, tetra(2-hydroxyalkyl) alkylenediamines, trialkylamines, and mixtures of the aforementioned compositions, and/or
(E) 0.05% by wt. to a maximum 15% by wt., preferably 0.1% to 3% by wt., in each case relative to the polyamide portion and/or the portion of polyamide structural units, of the composition of at least one aprotic compound selected from the group of N-alkylated, cyclic carboxylic acid amides containing 5-7 ring members and/or from the group of the urea derivatives, whose alkyl residues on the nitrogen are linear or branched and optionally can contain heteroatoms and heterogroups or form a linkage of the two N atoms.

4. Thermoplastic polyamide moulding materials according to any of Claims 1 through 3, **characterised in that** the copper-containing stabilising agent (B) comprises an alkali metal halide and a copper (I) halide and/or a copper (I) stearate and/or a copper (I) oxide, in particular a weight ratio of alkali metal halide to the sum of the copper (I) compositions being 2.5:1 to 100:1.

5. Thermoplastic polyamide moulding materials according to any of preceding Claims 1 through 4, **characterised in that** the compound containing metal-complexing groups (C) is present in a molar ratio to the sum of the copper (I) compositions of 0.5:1 to 3:1, in particular component (C) being present in at least an approximate equimolar quantity with respect to the quantity of copper of component (B).

6. Thermoplastic polyamide moulding materials according to one of Claims 1 through 5, **characterised in that** 2',3-bis [[3-[3,5-di-tert-butyl-4-hydroxyphenyl]propionyl]]-propionohydrazide and/or and/or 3-(salicyloylamino)-1,2,4-triazole are used as compound (C).

7. Thermoplastic polyamide moulding materials according to any of preceding Claims 1 through 6, **characterised in that** component (A) contains at least 30% by wt. polyamide and/or at least one copolymer containing at least 30% by wt. polyamide structural units, in particular at least 40% by wt. polyamide and/or at least one copolymer containing at least 40% by wt. polyamide structural units.

8. Thermoplastic polyamide moulding materials according to one of Claims 1 through 7, **characterised in that** the moulding materials contain common additives singly or in combination which are selected from the group comprising non-polyamide polymers, in particular from the group of polyesters, polyolefins, polycarbonates, ABS polymers, functionalised copolyolefins, the group of ionomers, and also acrylonitrile, and bonding agents, impact modifiers, flame retardants, fillers, reinforcing agents such as glass and carbon fibres (C fibres), as well as stabilisers against degradation by light, heat, or weathering, minerals, processing aids, and dyes and antistatic agents.

9. Thermoplastic polyamide moulding materials according to any of Claims 1 through 8, **characterised in that** said materials contain nanoscale fillers.

10. Thermoplastic polyamide moulding materials according to Claim 8, **characterised in that** the impact modifier is selected from functionalised polyolefins that are grafted with acrylic acid or maleic anhydride.

11. Thermoplastic polyamide moulding materials according to Claim 3, **characterised in that** N-butylbenzenesulfonic acid amide is used as benzenesulfonic acid amide.

12. Thermoplastic polyamide moulding materials according to Claim 3, **characterised in that** N-butyltoluenesulfonic acid amide is used as *ortho-, para-*toluenesulfonic acid amide.

13. Thermoplastic polyamide moulding materials according to Claim 3, **characterised in that** N,N,N'N'-tetrakis(2-hydroxypropyl)ethylenediamine is used as tetra(2-hydroxyalkyl)alkylenediamine.

14. Thermoplastic polyamide moulding materials according to Claim 3, **characterised in that** the cyclic carboxylic acid of component (E) corresponds to the following formula I, and x is 1 to 3, and R1 has 1 to 12 C atoms and is linear, branched, or cyclic, and also contains heteroatoms and heterogroups, in particular -O- bridges:

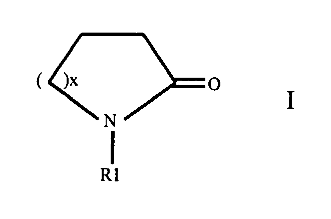

15. Thermoplastic polyamide moulding materials according to Claim 3, **characterised in that** the urea derivative of component (E) corresponds to formula II,
R'/R2- N - CO - N -R2/R' II
where R2 and R' can be different or identical, linear or branched, and can contain 1 to 8 C atoms, or 2 R' can form an ethylene or propylene bridge between the two N atoms.

16. Thermoplastic polyamide moulding materials according to Claim 15, **characterised in that** R1 is an octyl group.

17. Thermoplastic polyamide moulding materials according to Claim 15, **characterised in that** R2 and R' are butyl groups.

18. Thermoplastic polyamide moulding materials according to Claim 3, **characterised in that** as an aprotic compound at least one compound (component E) is used that is selected from the group consisting of N-isopropylpyrrolidone, N-butylpyrrolidone, N-tert-butylpyrrolidone, N-hexylpyrrolidone, N-octylpyrrolidone, N-dodecylpyrrolidone, N-cyclohexylpyrrolidone, N-2-hydroxyethylpyrrolidone, N-3-hydroxypropylpyrrolidone, N-2-methoxyethylpyrrolidone, N-3-methoxypropylpyrrolidone, N-octylcaprolactam, cyclic N,N-dimethylethylene urea, cyclic N,N-dimethylpropylene urea, and tetrabutyl urea and mixtures thereof.

19. Thermoplastic polyamide moulding materials according to any of Claims 1 through 18, **characterised in that** the polyamide or the copolymer is essentially a polyamide selected from the group comprising PA 6, PA 66, PA 11, PA 12, PA 46, PA 1212, PA 1012, PA 610, PA 612, PA 69, PA 9T, PA 10T, PA 12T, PA 12I, PA 6T/12, PA 12T/ 12, PA 10T/12, PA 12T/106, PA 10T/106, PA 6/66, PA 6/612, PA 6/66/610, PA 6/66/12 or the mixtures or copolyamides thereof, and PA 6T/66, PA 6/6T, PA 6/66/6T, PA 6/6I, PA 6T/6I, PA 6I/6T, PA 12/6T/66, PA 12/6T/6I or the mixtures or copolyamides thereof, and polyamides selected from the group of PA 12/MACMI, PA 66/6I/6T, and PA MXD 6/6, wherein dimerised fatty acids containing 36 and 44 C atoms may also be used as monomers, or the mixtures or copolyamides thereof.

20. Thermoplastic polyamide moulding materials according to one of Claims 1 through 19, **characterised in that** the polyamide is essentially polyamide 12, in particular polyamide 12 being a hydrolytically produced polyamide 12.

21. Thermoplastic polyamide moulding materials according to one of Claims 1 through 20, **characterised in that** the copolymer is a polyamide 12 block copolymer containing polyester, polyether, polysiloxane, polycarbonate, polyacrylate, polymethacrylate, or polyolefin segments as additional structural units, in addition to a proportion of at least 20% by wt. polyamide 12 structural units.

22. Thermoplastic polyamide moulding materials according to one of Claims 1 through 21, **characterised in that** the moulding materials are polyamide mixtures comprising polyamide 12 and a partially aromatic polyamide, optionally containing compatibility mediators and/or impact modifiers.

23. Thermoplastic polyamide moulding materials according to any of Claims 1 through 22, **characterised in that** the moulding materials contain a polyamide mixture composed of polyamide 12 with at least one (co)polyamide selected from the group consisting of PA 6, PA 66, PA 11, PA 46, PA 1212, PA 1012, PA 610, PA 612, PA 69, PA 9T, PA 10T, PA 12T, PA 12I, PA 6T/12, PA 12T/12, PA 10T/12, PA 12T/106, PA 10T/106, PA 6/66, PA 6/612, PA 6/66/610, PA 6/66/12 or the mixtures or copolyamides thereof, and PA 6T/66, PA 6/6T, PA 6/66/6T, PA 6/6I, PA 6T/6I, PA 6I/6T, PA 16/6T/66, PA 12/6T/6I or the mixtures or copolyamides thereof, and polyamides from the group of PA 12/MACMI, PA 66/61/6T, and PA MXD 6/6, wherein dimerised fatty acids containing 36 and 44 C atoms can also be used as monomers, or the mixtures or copolyamides thereof.

24. Thermoplastic polyamide moulding materials according to any of preceding Claims 1 through 23, **characterised in that** the polyamide mixture is present as a single- or multi-phase mixture optionally containing phase mediators and/or impact resistance modifiers.

25. Thermoplastic polyamide moulding materials according to Claim 24, **characterised in that** the polyamide mixture consist of polyamide 12 and an amorphous copolyamide or polyamide.

26. Process for the production of thermoplastic polyamide moulding materials according to any of Claims 1 through 25, **characterised in that** the process comprises the compounding of the polyamide composition (A), 0.01% to 3.0% by wt. of stabiliser (B), relative to the polyamide portion and/or the portion of polyamide structural units, with at least one organic compound containing metal-complexing groups (C) and optionally a plasticizer (D) and/or an aprotic compound (E), preferably at elevated temperature, the component (C) being added in at least an approximate equimolar quantity with respect to the quantity of copper of component (B).

27. Process for the production of thermoplastic polyamide moulding materials according to Claim 26, **characterised in that** the plasticizer (D) and/or the aprotic compound (E) are added to the granulate composed of (co)polyamide, and are mixed, preferably at elevated temperature, until the compound has diffused into the granulate.

28. Process according to Claim 27, **characterised in that** the process is carried out in the range of room temperature to a maximum 160°C, in particular at 60 to 120°C.

29. Process for the production of thermoplastic polyamide moulding materials according to Claim 26, **characterised in that** the plasticizer (D) and/or the aprotic compound (E) are worked in a high proportion of 3 to 30 % by wt. in a polyamide corresponding to component (A), and this granulate is then used as a master batch mould.

30. Process for the production of thermoplastic polyamide moulding materials according to Claim 26, **characterised in that** the plasticizer (D) and/or the aprotic compound (E) are continuously worked in the polyamide moulding materials during an extrusion procedure, preferably with the use of a twin-screw extruder, in particular simultaneously with the other formulation components.

31. Use of the thermoplastic polyamide moulding materials according to Claims 1 through 25 for thermoplastic conversion to articles in discontinuous processes, in particular in injection moulding, and in continuous processes such as extrusion to produce films, tubes, fibres, and sheathings.

32. Articles comprising moulding materials according to one or more of Claims 1 through 25, producible by the process according to one or more of Claims 26 through 30.

33. Extruded, optionally co-extruded, hydrolysis-resistant, bursting pressure-resistant, and flexible coolant lines comprising at least one (external) polyamide layer, the polyamide layer being obtainable from the polyamide moulding materials according to one or more of Claims 1 through 25, optionally an internal layer containing halogenated or non-halogenated homo- or copolyolefins from mixtures or blends of same, optionally with bonding agent modification, or optionally containing an intermediate layer composed of a material that is compatible with the external and internal layers.

34. Coolant line according to Claim 33, **characterised in that** the coolant line, at least in parts, has corrugated walls having annular or spiral shapes.

35. Coolant line according to Claim 34, **characterised in that** the corrugation is broken into two approximately oppositely facing surface line areas.

36. Coolant line according to one of Claims 33 through 35, **characterised in that** the intermediate layer is composed of a polyolefin that is provided with functional groups and is compatible with the adjacent layers.

37. Coolant line according to one of preceding Claims 33 through 36, **characterised in that** the coolant line is producible by coextrusion of a polymer tube, optionally followed by formation of corrugations by blow moulding or vacuum moulding or by extrusion or coextrusion blow moulding.

## Revendications

1. Matières moulables en polyamide thermoplastique, contenant :
(A) au moins 20% en poids de polyamide et/ou d'au moins un copolymère avec au moins 20% en poids de motifs polyamide, le polyamide et/ou les motifs polyamide étant à base de Lactames aliphatiques en C₆ à C₁₂ ou d'acides ω-aminocarboxyliques ayant de 4 à 44 atomes de carbone, de préférence de 4 à 18 atomes de carbone, ou bien à base d'acides ω-aminocarboxyliques aromatiques ayant de 6 à 20 atomes de carbone, ou bien étant des polycondensats qui peuvent être obtenus par la polycondensation d'au moins une diamine du groupe des diamines aliphatiques ayant de 4 à 18 atomes de carbone, des diamines cycloaliphatiques ayant de 7 à 22 atomes de carbone en combinaison avec au moins un acide dicarboxylique du groupe des acides dicarboxyliques aliphatiques ayant de 4 à 44 atomes de carbone, des acides dicarboxyliques cycloaliphatiques ayant de 8 à 24 atomes de carbone et des acides dicarboxyliques aromatiques ayant de 8 à 20 atomes de carbone, et le polyamide et/ou le au moins un copolymère avec au moins 20% en poids de motifs polyamide présentant une teneur en groupes amino terminaux dans la plage de 25 à 300 *µ*éq./g et une teneur en groupes carboxyle terminaux inférieure à 20 *µ*éq./g, rapportées l'une et l'autre à la proportion de polyamide et/ou à la proportion de motifs polyamide ;
(B) de 0,01 % en poids à 2% en poids, rapporté à la proportion de polyamide et/ou à la proportion de motifs polyamide de la composition, d'un agent de stabilisation contenant du cuivre ;
(C) de 0,01% en poids à 3% en poids, rapporté à la proportion de polyamide et/ou à la proportion de motifs polyamide de la composition, d'au moins un composé organique avec des groupes complexant les métaux, choisi dans le groupe constitué par des groupes hydrazine, hydrazide d'acide ou hydrazone ainsi que dans le groupe des benzotriazoles, de façon que les ions de cuivre soient présents sous forme complexée par liaison aux groupes complexant les métaux.

2. Matières moulables en polyamide thermoplastique selon la revendication 1, **caractérisées en ce que** le polyamide et/ou le au moins un copolymère avec au moins 20% en poids de motifs polyamide présente une teneur en groupes amino terminaux dans la plage de 40 à 300 µéq./g et une teneur en groupes carboxyle terminaux inférieure à 15 µéq./g, rapportées l'une et l'autre à la proportion de polyamide et/ou à la proportion de motifs polyamide.

3. Matières moulables en polyamide thermoplastique selon la revendication 1 ou la revendication 2, **caractérisées en ce qu'**elles contiennent en plus les composants suivants :
(D) de 0,05% en poids jusqu'à un maximum de 15% en poids, de préférence de 0,1% en poids à 3% en poids, rapporté respectivement à la proportion de polyamide et/ ou à la proportion de motifs polyamide de la composition, d'au moins un composé choisi dans le groupe constitué par des agents plastifiants, comprenant des alkylamides de l'acide benzènesulfonique, des alkylamides de l'acide o-, p-toluènesulfonique, des hydroxybenzoates d'alkyles, des esters d'acides benzènecarboxyliques, des esters d'acide phtalique, des esters d'acides gras, des esters d'alcools plurivalents, des diesters d'acides dicarboxyliques avec un nombre de carbone des acides allant de 4 à 44 atomes, des esters d'acide trialkylmellitique, des esters d'acide phosphorique, des esters d'acide citrique, des tétra-alkylalkylène diamines, des tétra(2-hydroxyalkyl)alkylène diamines, des trialkylamines et des mélanges des composés précités, et/ou
(E) de 0,05% en poids jusqu'à un maximum de 15% en poids, de préférence de 0,1 % en poids à 3% en poids, rapporté respectivement à la proportion de polyamide et/ ou à la proportion de motifs polyamide de la composition, d'au moins un composé aprotique, choisi dans le groupe constitué par des amides d'acides carboxyliques cycliques N-alkylés ayant de 5 à 7 éléments dans le noyau cyclique et/ou dans le groupe des dérivés de l'urée, dont les résidus alkyle sur l'azote sont linéaires ou ramifiés et peuvent contenir le cas échéant des hétéroatomes et des hétérogroupes ou bien former une jonction des deux atomes de N.

4. Matières moulables en polyamide thermoplastique selon l'une quelconque des revendications 1 à 3, **caractérisées en ce que** l'agent de stabilisation contenant du cuivre (B) comprend un halogénure de métal alcalin et un halogénure de cuivre (1) et/ou un stéarate de cuivre (1) et/ou un oxyde de cuivre (1), en particulier selon un ratio en poids de l'halogénure de métal alcalin sur la somme des composés de cuivre (I) allant de 2,5:1 à 100:1.

5. Matières moulables en polyamide thermoplastique selon l'une quelconque des revendications 1 à 4 précédentes, **caractérisées en ce que** le composé avec des groupes complexant les métaux (C) est présent selon un ratio molaire par rapport à la somme des composés de cuivre (I) allant de 0,5:1 à 3:1, le composant (C) étant notamment présent en une quantité au moins à peu près équimolaire à la quantité de cuivre du composant (B).

6. Matières moulables en polyamide thermoplastique selon l'une des revendications 1 à 5, **caractérisées en ce que** le composé (C) utilisé est le 2',3-bis[[3-[3,5-di-*tert*-butyl-4-hydroxyphényl]propionyl]]propionohydrazide et/ou le 3-(salycyloylamino)-1,2,4-triazole.

7. Matières moulables en polyamide thermoplastique selon l'une quelconque des revendications 1 à 6 précédentes, **caractérisées en ce que** le composant (A) présente au moins 30% en poids de polyamide et/ou d'au moins un copolymère avec au moins 30% en poids de motifs polyamide, en particulier au moins 40% en poids de polyamide et/ou d'au moins un copolyamide avec au moins 40% en poids de motifs polyamide.

8. Matières moulables en polyamide thermoplastique selon l'une ou plusieurs des revendications 1 à 7, **caractérisées en ce que** les matières moulables contiennent des additifs usuels, seuls ou en combinaison, choisis dans le groupe constitué par des polymères autres que des polyamides, en particulier du groupe des polyesters, des polyoléfines, des polycarbonates, des polymères ABS, des copolyoléfines fonctionnalisées, du groupe des ionomères ainsi que l'acrylonitrile, et dans le groupe des agents adhésifs, des modificateurs de résilience, des agents ignifugeants, des matières de charge, des agents de renforcement tels que les fibres de verre et de carbone (fibres de C), ainsi que dans le groupe des agents de stabilisation contre la dégradation par la lumière, la chaleur ou les intempéries, des minéraux et des adjuvants de transformation, des colorants et des agents antistatiques.

9. Matières moulables en polyamide thermoplastique selon l'une quelconque des revendications 1 à 8, **caractérisées en ce qu'**elles contiennent des nanocharges.

10. Matières moulables en polyamide thermoplastique selon la revendication 8, **caractérisées en ce que** le modificateur de résilience est choisi parmi des polyoléfines fonctionnalisées greffées avec de l'acide acrylique ou de l'anhydride maléique.

11. Matières moulables en polyamide thermoplastique selon la revendication 3, **caractérisées en ce que** l'amide d'acide benzènesulfonique utilisé est l'amide d'acide N-butylbenzènesulfonique.

12. Matières moulables en polyamide thermoplastique selon la revendication 3, **caractérisées en ce que** l'amide d'acide *ortho-* ou *para*-toluènesulfonique utilisé est l'amide d'acide N-butyltoluènesulfonique.

13. Matières moulables en polyamide thermoplastique selon la revendication 3, **caractérisées en ce que** la tétra(2-hydroxyalkyl)alkylène diamine utilisée est la N,N,N',N'-tétrakis(2-hydroxypropyl)éthylène diamine.

14. Matières moulables en polyamide thermoplastique selon la revendication 3, **caractérisées en ce que** l'amide d'acide carboxylique cyclique du composant (E) correspond à la formule 1 suivante, où x vaut de 1 à 3 et R1 contient de 1 à 12 atomes de carbone, est linéaire, ramifié ou cyclique et contient en outre des hétéroatomes et des hétérogroupes, en particulier des ponts -O- :

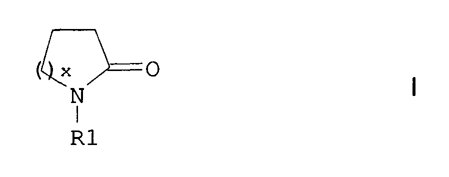

15. Matières moulables en polyamide thermoplastique selon la revendication 3, **caractérisées en ce que** le dérivé d'urée du composant (E) correspond à la formule II,
R'/R2-N-CO-N-R2/R' II
dans laquelle R2 et R' sont identiques ou différents et peuvent être linéaires ou ramifiés et posséder de 1 à 8 atomes de carbone, ou bien 2 R' peuvent former un pont éthylène ou propylène entre les deux atomes de N.

16. Matières moulables en polyamide thermoplastique selon la revendication 15, **caractérisées en ce que** R1 est un résidu octyle.

17. Matières moulables en polyamide thermoplastique selon la revendication 15, **caractérisées en ce que** R2 et R' sont des résidus butyle.

18. Matières moulables en polyamide thermoplastique selon la revendication 3, **caractérisées en ce que** le composé aprotique utilisé est au moins un composé (composant E) choisi dans le groupe constitué par la N-isopropylpyrrolidone, la N-butylpyrrolidone, la N-tert-butylpyrrolidone, la N-hexylpyrrolidone, la N-octylpyrrolidone, la N-dodécylpyrrolidone, la N-cyclohexylpyrrolidone, la N-2-hydroxyéthylpyrrolidone, la N-3-hydroxypropylpyrrolidone, la N-2-méthoxyéthylpyrrolidone, la N-3-méthoxypropylpyrrolidone, le N-octylcaprolactame, la N,N-diméthyléthylène urée cyclique, la N,N-diméthylpropylène urée cyclique et la tétrabutylurée ainsi que leurs mélanges.

19. Matières moulables en polyamide thermoplastique selon l'une quelconque des revendications 1 à 18, **caractérisées en ce que** le polyamide ou le copolymère est essentiellement un polyamide choisi dans !e groupe constitué par les PA 6, PA 66, PA 11, PA 12, PA 46, PA 1212, PA 1012, PA 610, PA 612, PA 69, PA 9T, PA 10T, PA 12T, PA 121, PA 6T/12, PA 12T/12, PA 10T/12, PA 12T/106, PA 10T/106, PA 6/66, PA 6/612, PA 6/66/610, PA 6/66/12, leurs mélanges ou leurs copolyamides, ainsi que les PA 6T/66, PA 6/6T, PA 6/66/6T, PA 6/61, PA 6T/61, PA 61/6T, PA 12/6T/66, PA 12/6T/61 ou leurs mélanges ou leurs copolyamides, ainsi que des polyamides choisi dans le groupe constitué par le PA 12/MACMI, le PA 66/61/6T, le PA MXD 6/6, des acides gras dimérisés avec 36 et 44 atomes de carbone pouvant également être utilisés comme monomères ou leurs mélanges ou leurs copolyamides.

20. Matières moulables en polyamide thermoplastique selon l'une des revendications 1 à 19, **caractérisées en ce que** le polyamide est essentiellement du polyamide 12, ledit polyamide 12 étant en particulier du polyamide 12 produit par voie hydrolytique.

21. Matières moulables en polyamide thermoplastique selon l'une des revendications 1 à 20, **caractérisées en ce que** le copolymère est un copolymère à blocs de polyamide 12 qui contient comme autres motifs des segments de polyester, de polyéther, de polysiloxane, de polycarbonate, de polyacrylate, de polyméthacrylate ou de polyoléfine, en plus d'une proportion d'au moins 20% en poids de motifs de polyamide 12.

22. Matières moulables en polyamide thermoplastique selon l'une quelconque des revendications 1 à 21, **caractérisées en ce que** les matières moulables sont des mélanges de polyamides composés de polyamide 12 et d'un polyamide partiellement aromatique, le cas échéant contenant en plus des agents de compatibilité et/ou des modificateurs de résilience.

23. Matières moulables en polyamide thermoplastique selon l'une quelconque des revendications 1 à 22, **caractérisées en ce que** les matières moulables contiennent un mélange de polyamides composé de polyamide 12 avec au moins un (co)polyamide choisi dans le groupe constitué par les PA 6, PA 66, PA 11, PA 46, PA 1212, PA 1012, PA 610, PA 612, PA 69, PA 9T, PA 10T, PA 12T, PA 12I, PA 6T/12, PA 12T/12, PA 10T/12, PA 12T/106, PA 10T/106, PA 6/66, PA 6/612, PA 6/66/610, PA 6/66/12, leurs mélanges ou leurs copolyamides, ainsi que les PA 6T/66, PA 6/6T, PA 6/66/6T, PA 6/61, PA 6T/6I, PA 61/6T, PA 16/6T/66, PA 12/6T/61 ou leurs mélanges ou leurs copolyamides, ainsi que des polyamides du groupe comprenant le PA 12/MACMI, le PA 66/61/6T, le PA MXD 6/6, des acides gras dimérisés avec 36 et 44 atomes de carbone pouvant également être utilisés comme monomères ou leurs mélanges ou leurs copolyamides.

24. Matières moulables en polyamide thermoplastique selon l'une quelconque des revendications 1 à 23 précédentes, **caractérisées en ce que** le mélange de polyamides se présente sous la forme d'un mélange à une ou plusieurs phases contenant le cas échéant des médiateurs de phases et/ou des modificateurs de résilience.

25. Matières moulables en polyamide thermoplastique selon la revendication 24, **caractérisées en ce que** le mélange de polyamides se compose de polyamide 12 et d'un copolyamide ou polyamide amorphe.

26. Procédé de production de matières moulables en polyamide thermoplastique selon l'une quelconque des revendications 1 à 25, **caractérisé en ce que** le procédé comprend le compoundage de la composition de polyamide (A), de 0,01 % en poids à 3,0% en poids de l'agent de stabilisation (B), rapporté à la teneur en polyamide et/ou à la teneur en motifs polyamide de la composition, avec au moins un composé organique avec des groupes complexant les métaux (C) et le cas échéant un agent plastifiant (D) et/ou un composé aprotique (E), de préférence à une température élevée, le composant (C) étant ajouté en une quantité au moins à peu près équimolaire à la quantité de cuivre du composant (B).

27. Procédé de production de matières moulables en polyamide thermoplastique selon la revendication 26, **caractérisé en ce que** l'on dépose l'agent plastifiant (D) et/ou le composé aprotique (E) sur les granulés de (co)polyamide et **en ce que** l'on mélange ces derniers, de préférence à une température élevée, jusqu'à ce que le composé ait diffusé dans les granulés.

28. Procédé selon la revendication 27, **caractérisé en ce que** le procédé s'effectue dans la plage allant de la température ambiante jusqu'à un maximum de 160°C, en particulier de 60 à 120°C.

29. Procédé de production de matières moulables en polyamide thermoplastique selon la revendication 26, **caractérisé en ce que** l'on incorpore l'agent plastifiant (D) et/ou le composé aprotique (E) en une proportion élevée allant de 3 à 30% en poids dans un polyamide correspondant au composant (A) et **en ce que** l'on ajoute ensuite ce granulé sous forme de master batch.

30. Procédé de production de matières moulables en polyamide thermoplastique selon la revendication 26, **caractérisé en ce que** l'on incorpore l'agent plastifiant (D) et/ou le composé aprotique (E) en continu pendant une opération d'extrusion, de préférence en utilisant une extrudeuse bivis, en particulier également en même temps que les autres constituants de la formulation dans les matières moulables en polyamide.

31. Utilisation des matières moulables en polyamide thermoplastique selon les revendications 1 à 25 pour la transformation thermoplastique en objets utilitaires dans des processus discontinus, en particulier dans le moulage par injection, et dans des processus continus tels que l'extrusion en films, en tubes, en fibres et en gaines.

32. Objets utilitaires, comprenant des matières moulables selon l'une ou plusieurs des revendications 1 à 25 et pouvant être produits par le procédé selon l'une ou plusieurs des revendications 26 à 30.

33. Conduits extrudés, le cas échéant coextrudés, résistant à l'hydrolyse, résistant aux pressions d'éclatement et flexibles pour liquides de refroidissement, comprenant au moins une couche (externe) de polyamide, cette couche de polyamide pouvant être obtenue à partir des matières moulables en polyamide selon l'une ou plusieurs des revendications 1 à 25, le cas échéant une couche interne contenant des homo- ou copolyoléfines halogénées ou non halogénées, de mélanges mécaniques ou autres de celles-ci, le cas échéant modifiées avec un agent adhésif, ou le cas échéant une couche intermédiaire d'un matériau compatible avec la couche externe et interne.

34. Conduit pour liquide de refroidissement selon la revendication 33, **caractérisé en ce qu'**il présente au moins sur des segments une paroi ondulée annulaire ou spiralée.

35. Conduit pour liquide de refroidissement selon la revendication 34, **caractérisé en ce que** la paroi est divisée en deux zones de génératrices sensiblement opposées l'une à l'autre.

36. Conduit pour liquide de refroidissement selon l'une des revendications 33 à 35, **caractérisé en ce que** la couche intermédiaire se compose d'une polyoléfine dotée de groupes fonctionnels qui est compatible avec les couches voisines.

37. Conduit pour liquide de refroidissement selon l'une des revendications 33 à 36 précédentes, **caractérisé en ce qu'**il peut être fabriqué par coextrusion d'un tube en polymère, suivie le cas échéant de la réalisation d'ondulations par formage par soufflage ou aspiration ou bien par extrusion- ou coextrusion-soufflage.
